# EUROPEAN PATENT APPLICATION

(11) **EP 4 822 873 A1**
(43) Date of publication of application: **14.10.2026**
(21) Application number: 24899382.6
(22) Date of filing: 04.09.2024
(51) Int. Cl.: H01M 50/454, H01M 50/449, H01M 50/457, H01M 50/463, H01M 50/44, H01M 50/491, H01M 10/0525

(54) **BATTERY CELL, BATTERY AND ELECTRIC APPARATUS**

(30) Priority: 08.12.2023 CN 202311685498
(71) Applicant: Contemporary Amperex Technology Co., Limited, Ningde, Fujian 352100 (CN)
(72) Inventor: WU, Kai, Ningde, Fujian 352100 (CN); XIAO, Zhiwei, Ningde, Fujian 352100 (CN); WEI, Manxiang, Ningde, Fujian 352100 (CN); XU, Ming, Ningde, Fujian 352100 (CN); ZHANG, Peng, Ningde, Fujian 352100 (CN); YANG, Jianrui, Ningde, Fujian 352100 (CN)
(74) Representative: Gong, Jinping
(86) International application number: PCT/CN2024/116935
(87) International publication number: WO 2025/118736

(57) **Abstract**

Disclosed are a battery cell (5), a battery and an electrical apparatus. The battery cell (5) includes a negative electrode sheet and a separator, where the separator includes a porous substrate and a coating arranged on at least one surface of the porous substrate, the coating including nanocellulose and a granular filler; and the width of the separator is denoted as A, the width of the negative electrode sheet is denoted as B, both are in units of mm, and 0<A-B≤5 mm. The battery cell (5) incorporates a high energy density, a high reliability and a good processing property.

## Description

### CROSS-REFERENCE TO RELATED APPLICATIONS

The present disclosure claims priority to Chinese Patent Application No. 202311685498.5, filed on December 08, 2023 and entitled "Battery Cell, Battery, and Electric Apparatus", which is incorporated herein by reference in its entirety.

### TECHNICAL FIELD

The present disclosure relates to a battery cell, a battery, and an electric apparatus.

### BACKGROUND

With the increasing demand for high-energy-density batteries, ultra-thin separators have begun to be widely used. However, existing ultra-thin separators cannot achieve both low thickness and high heat resistance. The existing ultra-thin separators are prone to thermal shrinkage. Therefore, in order to sufficiently separate the positive electrode and the negative electrode and prevent the positive electrode and the negative electrode from being short-circuited due to the shrinkage of the separator under the heating condition of the battery, the width of the separator needs to be greater than the width of the negative electrode sheet. Generally, the difference in width between the separator and the negative electrode sheet needs to be greater than 6 mm, such that in the battery production process, the separator is prone to local redundancy, folding or breakage, which in turn affects the processability of the battery. In order to obtain a high-energy-density battery, the width of the negative electrode sheet is increased to reduce the difference in width between the separator and the negative electrode sheet, and the separator is prone to short circuit after thermal shrinkage in a high temperature environment or a thermal abuse environment of the battery. Therefore, it is difficult for the existing battery to incorporate a high energy density, a high reliability and a good processing property.

### SUMMARY

The present disclosure provides a battery cell, a battery, and an electric apparatus. The battery cell incorporates a high energy density, a high reliability and a good processing property.

A first aspect of the present disclosure provides a battery cell, including a negative electrode sheet and a separator, where the separator includes a porous substrate and a coating arranged on at least one surface of the porous substrate, the coating including nanocellulose and a granular filler; and the width of the separator is denoted as A, the width of the negative electrode sheet is denoted as B, both are in units of mm, and 0<A-B≤5 mm.

The difference in width between the separator and the negative electrode sheet of the battery cell provided by the embodiment of the present disclosure is less than or equal to 5 mm. Since the difference in width between the separator and the negative electrode sheet is reduced, the probability of the separator having local redundancy, folding or breakage problems during the assembly process of the battery cell is reduced, such that the battery cell can have good processing property. Moreover, when the inner space of the battery cell is the same and the width of the separator is the same, since the difference in width between the separator and the negative electrode sheet is reduced, the coating width of the negative electrode sheet and the positive electrode sheet is increased, thereby enabling the battery cell to have a high volumetric energy density.

The coating of the separator used in the battery cell provided by the embodiment of the present disclosure includes nanocellulose and a granular filler. The nanocellulose has good high-temperature resistance and small volume change after being heated, thereby improving the heat resistance of the separator. The nanocellulose is less in density, thereby reducing the mass of the battery cell and improving the gravimetric energy density of the battery cell. In addition, the nanocellulose itself contains a large number of hydroxyl, and thus can also be overlapped with each other to form a three-dimensional skeleton structure, and further, by matching with the granular filler, the mechanical strength and puncture resistance of the separator can also be improved. The nanocellulose itself contains a large number of hydroxyl, and can be connected to the granular filler, the porous substrate, and the like through acting forces such as hydrogen bonds and the van der Waals force, thereby further enhancing the bonding strength between the granular fillers in the coating and between the coating and the porous substrate, solving the powder falling problem, and improving the processability of the separator and the battery cell. Therefore, the battery cell provided by the embodiment of the present disclosure may also have high reliability.

In some embodiments, 2 mm≤A-B≤4 mm, optionally, 2.5 mm≤A-B≤3.5 mm. This helps further improve the volumetric energy density and processability of the battery cell.

In some embodiments, an average length of the nanocellulose is 100 nm to 1,200 nm, optionally 200 nm to 1,000 nm.

By adjusting the average length of the nanocellulose within the above range, it is beneficial for the nanocellulose to be overlapped to form a three-dimensional skeleton structure, and it is also beneficial for the three-dimensional skeleton structure and the granular filler to be overlapped to form an integrated coating, which is beneficial to improving the heat resistance of the separator, and is further beneficial to reducing the risk of short circuit failure during the use of the battery cell, and is also beneficial to improving the cycle performance of the battery cell. By adjusting the average length of the nanocellulose within the above range, it is also beneficial for a coating slurry to have an appropriate viscosity, thereby facilitating coating, and it is also beneficial to improving the uniformity and consistency of the coating.

In some embodiments, an average diameter of the nanocellulose is 11 nm to 40 nm, optionally 15 nm to 32 nm.

By adjusting the average diameter of the nanocellulose within the above range, it is beneficial for the nanocellulose to be overlapped to form a three-dimensional skeleton structure, and it is also beneficial for the three-dimensional skeleton structure and the granular filler to be overlapped to form an integrated coating, which is beneficial to improving the heat resistance of the separator, and is further beneficial to reducing the risk of short circuit failure during the use of the battery cell, and is also beneficial to improving the cycle performance of the battery cell.

In some embodiments, an aspect ratio of the nanocellulose is 5 to 60, optionally 12 to 35.

By adjusting the aspect ratio of the nanocellulose within the above range, it is beneficial for the nanocellulose to be overlapped to form a three-dimensional skeleton structure, and it is also beneficial for the formed three-dimensional skeleton structure and the granular filler to be overlapped to form an integrated coating, which is beneficial to improving the heat resistance of the separator, and is further beneficial to reducing the risk of short circuit failure during the use of the battery cell, and is also beneficial to improving the cycle performance of the battery cell. By adjusting the aspect ratio of the nanocellulose within the above range, it is also beneficial to improving the electrolyte wettability of the separator, thereby facilitating ion transmission and reducing dendrites.

In some embodiments, the nanocellulose includes a modifying group, and the modifying group includes at least one of amino, carboxyl, aldehyde, a sulfonic acid group or a phosphate group, and optionally includes at least one of a sulfonic acid group or a phosphate group.

When the nanocellulose has the above specific modifying group, on the one hand, the heat resistance of the separator can be effectively improved, the thermal stability of the battery cell can be improved, and the risk of short circuit failure during the use of the battery cell can be reduced, and on the other hand, the bonding strength between the coating and the porous substrate can also be improved. When the nanocellulose has the above specific modifying group, it is also beneficial for the nanocellulose to be overlapped with the granular filler to form an integrated coating, such that the coating can have a stable spatial network structure, which is beneficial to improving the wettability and liquid retention of the electrolyte solution of the separator, improving the ion transmission characteristic and the voltage withstand breakdown characteristic of the separator, and is also beneficial to matching the high-voltage positive electrode active material, and further improving the energy density of the battery cell.

In some embodiments, the nanocellulose includes hydroxyl and a modifying group, and a molar ratio of the modifying group to the hydroxyl is 1:4 to 4:1, optionally 2:3 to 7:3.

When the molar ratio of the modifying group to the hydroxyl is within the above range, heat resistance, ion transmission characteristic, electrolyte solution wettability, and liquid retention of the separator can be further improved, thereby helping reduce a risk of a short circuit failure during the use of the battery cell, and also helping improve the cycle performance of the battery cell.

In some embodiments, a mass content of the nanocellulose in the coating is 5 wt% to 60 wt%, optionally 7 wt% to 45 wt%.

In some embodiments, a mass content of the granular filler in the coating is greater than 38 wt%, and optionally 53 wt% to 91 wt%.

The mass contents of the nanocellulose and the granular filler within the above ranges can enable the separator to have high heat resistance and good ion transmission characteristic, and thus can enable the battery cell to have good cycle performance, and is also beneficial for the coating to have an appropriate viscosity, which is beneficial to coating, and is also beneficial to maintaining a high bonding strength between the coating and the porous substrate, thereby improving the structural stability of the separator; and is also beneficial for the nanocellulose and the granular filler to be overlapped to form an integrated coating, such that the coating has a more stable spatial network structure.

In some embodiments, a thickness of the porous substrate is less than or equal to 5 µm, optionally 3 µm to 4.5 µm.

In some embodiments, an average pore size of the porous substrate is 10 nm to 60 nm, optionally 20 nm to 40 nm.

In some embodiments, a porosity of the porous substrate is 20% to 60%, optionally 30% to 50%.

In some embodiments, a material of the porous substrate includes polyolefin, optionally polyethylene.

In some embodiments, a puncture strength of the porous substrate is greater than or equal to 390 gf, optionally 400 gf to 480 gf.

The higher the puncture strength of the porous substrate is, the better the puncture resistance of the porous substrate is, which can effectively prevent the positive and negative electrode particles and metal foreign particles from puncturing the separator to cause the positive electrode and the negative electrode to be short-circuited. Therefore, the puncture strength of the porous substrate within the above range can improve the pass rate of the short circuit test of the battery cell and improve the reliability of the battery cell.

In some embodiments, a longitudinal thermal shrinkage rate of the porous substrate at 105°C for 1 h is less than or equal to 3%, optionally 1% to 2.5%.

In some embodiments, a transverse thermal shrinkage rate of the porous substrate at 105°C for 1 h is less than or equal to 2%, optionally 1% to 1.8%.

The decrease of the thermal shrinkage rate of the porous substrate represents good heat resistance of the porous substrate, thereby improving the pass rate of the short circuit test of the battery cell and improving the reliability of the battery cell.

In some embodiments, a longitudinal tensile strength of the porous substrate is greater than or equal to 2,700 kgf/cm², optionally 2,800 kgf/cm² to 3,500 kgf/cm².

In some embodiments, a transverse tensile strength of the porous substrate is greater than or equal to 2,500 kgf/cm², optionally 2,600 kgf/cm² to 3,200 kgf /cm².

In some embodiments, the granular filler includes one or more of organic particles, inorganic particles, and an organic-inorganic composite material.

In some embodiments, the granular filler includes a first component with a secondary particle morphology and a second component with a primary particle morphology.

The first component with the secondary particle morphology can be better overlapped with the three-dimensional skeleton structure formed by the nanocellulose to form an integrated effect, such that the coating can have a more stable spatial network structure, thereby further improving the heat resistance of the separator and the thermal stability of the battery cell. The second component with the primary particle morphology is beneficial to reducing the moisture content of the coating and improving the ion transmission characteristic of the coating, thereby helping improve the cycle performance of the battery cell.

In some embodiments, an average particle size of the first component with the secondary particle morphology is less than an average particle size of the second component with the primary particle morphology.

This is beneficial to better play the role of the first component with the secondary particle morphology and the second component with the primary particle morphology. The first component with the secondary particle morphology has a smaller particle size and better affinity with the nanocellulose, and the nanocellulose can also be overlapped in the gaps between the primary particles in the first component constituting the secondary particle morphology, thereby helping the nanocellulose and the first component with the secondary particle morphology be overlapped to form an integrated coating, such that the coating has a more stable spatial network structure, thereby further improving the heat resistance of the separator. The second component with the primary particle morphology has a larger particle size and higher strength, which can better play a role of skeleton support in the coating, reduce the thermal shrinkage of the separator and improve the heat resistance of the separator, and also help the coating have more pore structures and less moisture content, thereby further improving the ion transmission characteristic of the separator.

In some embodiments, the average particle size of the first component with the secondary particle morphology is less than 200 nm, optionally 80 nm to 180 nm.

The average particle size of the first component with the secondary particle morphology within the above range can make it have a higher specific surface area, and can also better match and overlap with the three-dimensional skeleton structure formed by the nanocellulose to form an integrated effect, thereby increasing the heat resistance of the separator and the wetting and retention characteristics of the separator to the electrolyte solution, thereby helping improve the thermal stability and cycle performance of the battery cell.

In some embodiments, the average particle size of the second component with the primary particle morphology is 200 nm to 600 nm, optionally 300 nm to 500 nm.

The average particle size of the second component with the primary particle morphology within the above range can better play a supporting role of the second component with primary particle morphology, such that the coating maintains a stable pore structure during long-term charging and discharging, thereby facilitating the reduction of the moisture content of the separator and the promotion of ion transmission, and also improving the heat resistance of the separator.

In some embodiments, a particle size of the primary particles in the first component constituting the secondary particle morphology is 15 nm to 45 nm, optionally 20 nm to 35 nm.

The particle size of the primary particles in the first component constituting the morphology of the secondary particles is within the above range, such that the first component can have a good secondary particle morphology, which is beneficial for the first component to be better overlapped with the three dimensional skeleton structure formed by the nanocellulose to form an integrated effect.

In some embodiments, a specific surface area of the first component with the secondary particle morphology is greater than a specific surface area of the second component with the primary particle morphology.

This is beneficial to better play the role of the first component with the secondary particle morphology and the second component with the primary particle morphology.

In some embodiments, the specific surface area of the first component with the secondary particle morphology is greater than 20 m²/g, optionally 30 m²/g to 80 m²/g.

The specific surface area of the first component with the secondary particle morphology is within the above range, which has better affinity with the nanocellulose, and can also better match and overlap with the three-dimensional skeleton structure formed by the nanocellulose to form an integrated effect, thereby increasing the heat resistance of the separator and the wetting and retention characteristics of the separator to the electrolyte solution, thereby helping improve the thermal stability and cycle performance of the battery cell.

In some embodiments, the specific surface area of the second component with the primary particle morphology is less than or equal to 20 m²/g, optionally 5 m²/g to 15 m²/g.

The specific surface area of the second component with the primary particle morphology is within the above range, which is beneficial to reducing the moisture content of the separator, and also beneficial to improving the heat resistance of the separator.

In some embodiments, a mass content of the first component with the secondary particle morphology in the coating is greater than a mass content of the second component with the primary particle morphology in the coating.

This is beneficial to better play the role of the first component with the secondary particle morphology and the second component with the primary particle morphology.

In some embodiments, the mass content of the first component with the secondary particle morphology in the coating is 10 wt% to 85 wt%, optionally 20 wt% to 75 wt%.

The mass content of the first component with the secondary particle morphology is within the above range, which is beneficial for the coating slurry to have an appropriate viscosity and is further beneficial to coating; in addition, it is also beneficial to be overlapped with the three-dimensional skeleton structure formed by the nanocellulose to form an integrated effect, such that the coating can have a more stable spatial network structure, thereby improving the heat resistance and ion transmission characteristic of the separator.

In some embodiments, the mass content of the second component with the primary particle morphology in the coating is 5 wt% to 70 wt%, optionally 7 wt% to 60 wt%.

The mass content of the second component with the primary particle morphology within the above range can better play a supporting role of the second component with primary particle morphology, such that the coating maintains a stable pore structure during long-term charging and discharging, thereby facilitating the reduction of the moisture content of the separator and the promotion of ion transmission. The mass content of the second component with the primary particle morphology within the above range can also improve the overall bulk density of the granular filler, and further improve the heat resistance and puncture resistance of the separator.

In some embodiments, the coating further includes a nongranular binder. optionally, a content of the nongranular binder in the coating is less than or equal to 3 wt%, based on the total mass of the coating.

In some embodiments, the separator further comprises a bonding layer, and the bonding layer is arranged on at least a part of a surface of the coating. Optionally, the bonding layer includes a granular binder. Optionally, the binder includes at least one of an acrylate monomer homopolymer or copolymer, an acrylic monomer homopolymer or copolymer, and a fluorine-containing olefin monomer homopolymer or copolymer.

In some embodiments, a thickness of the coating is 0.2 µm to 2 µm, optionally 0.4 µm to 1 µm. The thickness of the coating within the above range can not only enable the battery cell to have a high energy density, but also enable the separator to have a low thermal shrinkage, such that the battery cell has a high reliability.

In some embodiments, a total thickness of the separator is 4 µm to 10 µm, optionally 4.5 µm to 8.5 µm. The total thickness of the coating within the above range can not only enable the battery cell to have a high energy density, but also enable the separator to have a low thermal shrinkage, such that the battery cell has a high reliability.

In some embodiments, a longitudinal thermal shrinkage rate of the separator at 150°C for 1 h is less than or equal to 3%.

In some embodiments, a transverse thermal shrinkage rate of the separator at 150°C for 1 h is less than or equal to 2%.

The separator has a low thermal shrinkage rate at a high temperature, whereby it is possible to allow the battery cell to have a high reliability.

In some embodiments, the negative electrode sheet includes a negative electrode current collector and a negative electrode film layer arranged on at least one surface of the negative electrode current collector, the negative electrode film layer includes a negative electrode active material, and the negative electrode active material includes a carbon material. Optionally, the carbon material includes one or more of artificial graphite and natural graphite..

In some embodiments, the negative electrode sheet includes a negative electrode current collector and a negative electrode film layer arranged on at least one surface of the negative electrode current collector, the negative electrode film layer includes a negative electrode active material, and the negative electrode active material includes a silicon-based material. Optionally, the silicon-based material further includes one or more of an alkali metal element and an alkaline earth metal element, and optionally includes one or more of Li and Mg. Optionally, a mass percentage of the silicon-based material in the negative electrode active material is greater than or equal to 5 wt%, optionally 8 wt% to 20 wt%. This allows the battery cell to have both a high energy density and a long cycle life.

In some embodiments, an upper charge cutoff voltage of the battery cell is greater than or equal to 4.25 V, optionally 4.30 V to 4.45 V.

In some embodiments, the battery cell further includes a positive electrode sheet, where the positive electrode sheet includes a positive electrode current collector and a positive electrode film layer arranged on at least one surface of the positive electrode current collector, the positive electrode film layer includes a positive electrode active material, the positive electrode active material includes a layered lithium-containing transition metal oxide, and a volume-distributed particle size Dv50 of the positive electrode active material is less than or equal to 6 µm, optionally, 2 µm to 5 µm.

The positive electrode sheet provided by the embodiment of the present disclosure uses a positive electrode active material having a small volume-distributed particle size Dv50, which can shorten the diffusion path of lithium ions in the positive electrode active material, and then can quickly consume the lithium ions transmitted from the negative electrode to the positive electrode through the separator. In this case, a difference in concentration between lithium ions on the negative electrode side and the positive electrode side of the separator will be increased, and a driving force for transmitting the lithium ions from the negative electrode to the positive electrode is increased, thereby improving low-temperature performance and cycle performance of the battery cell.

In some embodiments, a volume-distributed particle size Dv90 of the positive electrode active material is less than 14 µm, optionally 4.5 µm to 13.5 µm.

By further adjusting the volume-distributed particle size Dv90 of the positive electrode active material, the diffusion path of the lithium ions in the positive electrode active material can be further shortened, thereby further increasing the difference in concentration between lithium ions on the negative electrode side and the positive electrode side of the separator, increasing the driving force for transmitting the lithium ions from the negative electrode to the positive electrode, and further improving the low-temperature performance of the battery cell. By further adjusting the volume-distributed particle size Dv90 of the positive electrode active material, the side reactions of the battery can also be reduced, and the capacity attenuation rate of the battery can be reduced, thereby facilitating the improvement of the cycle performance of the battery cell. By further adjusting the volume-distributed particle size Dv90 of the positive electrode active material, the positive electrode sheet can also have a higher compaction density, which is also beneficial to improving the energy density of the battery cell.

In some embodiments, a volume-distributed particle size Dv10 of the positive electrode active material is less than 3 µm, optionally 1 µm to 2 µm.

By further adjusting the volume-distributed particle size Dv10 of the positive electrode active material, the side reactions of the battery can be reduced, and the capacity attenuation rate of the battery can be reduced, thereby facilitating the improvement of the cycle performance of the battery cell, and the positive electrode sheet can also have a higher compaction density, thereby facilitating the improvement of the energy density of the battery cell.

In some embodiments, a particle size distribution (DV90-DV10)/DV50 of the positive electrode active material is 0.8 to 2.5, optionally 1.3 to 2.3.

By further adjusting the particle size distribution (Dv90-Dv10)/Dv50 of the positive electrode active material within the above range, the compaction density of the positive electrode sheet can be improved, and the space utilization rate of the positive electrode active material can be improved, thereby helping improve the energy density of the battery cell. By further adjusting the particle size distribution (Dv90-Dv10)/Dv50 of the positive electrode active material within the above range, the contact resistance between the positive electrode active material particles can be reduced, and the impedance of the battery cell can be reduced, which further helps improve the low-temperature performance of the battery cell.

In some embodiments, the positive electrode active material includes a layered lithium-containing transition metal oxide with a monocrystalline morphology, or includes both a layered lithium-containing transition metal oxide with a monocrystalline morphology and a layered lithium-containing transition metal oxide with a polycrystalline morphology.

In some embodiments, a volume-distributed particle size Dv50 of the layered lithium-containing transition metal oxide with the monocrystalline morphology is less than or equal to 5 µm, optionally 2 µm to 4 µm.

In some embodiments, a volume-distributed particle size Dv90 of the layered lithium-containing transition metal oxide with the monocrystalline morphology is less than or equal to 10 µm, optionally 4.5 µm to 8 µm.

In some embodiments, a volume-distributed particle size Dv10 of the layered lithium-containing transition metal oxide with the monocrystalline morphology is less than or equal to 3 µm, optionally 1 µm to 2 µm.

The particle size of the layered lithium-containing transition metal oxide with a monocrystalline morphology is reduced, which can further shorten the diffusion path of the lithium ions in the positive electrode active material, such that the positive electrode active material quickly consumes the lithium ions in the electrolyte solution, thereby further increasing the difference in concentration of the lithium ions between the negative electrode side and the positive electrode side of the separator, increasing the driving force for transmitting the lithium ions from the negative electrode to the positive electrode, and further improving the low-temperature performance of the battery cell.

By adjusting the volume-distributed particle size Dv50, Dv90, and/or Dv10 of the layered lithium-containing transition metal oxide with a monocrystalline morphology to be within the above range, it is beneficial for the battery cell to have both good low-temperature performance and good cycle performance.

In some embodiments, a particle size distribution (Dv90-Dv10)/Dv50 of the layered lithium-containing transition metal oxide with the monocrystalline morphology is 0.8 to 2.5, optionally 1.3 to 1.5.

By adjusting the particle size distribution (Dv90-Dv10)/Dv50 of the layered lithium-containing transition metal oxide with the monocrystalline morphology to be within the above range, the compaction density of the positive electrode sheet can be improved, the space utilization rate of the positive electrode active material can be improved, which in turn helps improve the energy density of the battery cell, and the contact resistance between the positive electrode active material particles can be reduced, the impedance of the battery cell can be reduced, which in turn helps improve the low-temperature performance of the battery cell.

In some embodiments, a volume-distributed particle size Dv50 of the layered lithium-containing transition metal oxide with the polycrystalline morphology is 7 µm to 12 µm, optionally 8 µm to 10 µm.

In some embodiments, a volume-distributed particle size Dv90 of the layered lithium-containing transition metal oxide with the polycrystalline morphology is12 µm to 20 µm, optionally 13 µm to 18 µm.

In some embodiments, a volume-distributed particle size Dv10 of the layered lithium-containing transition metal oxide with the polycrystalline morphology is 2 µm to 6 µm, optionally 3 µm to 5 µm.

By adjusting the volume-distributed particle size Dv50, Dv90, and/or Dv10 of the layered lithium-containing transition metal oxide with a polycrystalline morphology within the above range, it is beneficial for the battery cell to have a high energy density, good low-temperature performance, good cycle performance, and a low manufacturing cost.

In some embodiments, a particle size distribution (Dv90-Dv10)/Dv50 of the layered lithium-containing transition metal oxide with the polycrystalline morphology is 1.1 to 1.5, optionally 1.2 to 1.4.

By adjusting the particle size distribution (Dv90-Dv10)/Dv50 of the layered lithium-containing transition metal oxide with the polycrystalline morphology to be within the above range, the compaction density of the positive electrode sheet can be improved, the space utilization rate of the positive electrode active material can be improved, which in turn helps improve the energy density of the battery cell, and the contact resistance between the positive electrode active material particles can be reduced, the impedance of the battery cell can be reduced, which in turn helps improve the low-temperature performance of the battery cell.

A second aspect of the present disclosure provides a battery, including the battery cell provided in the first aspect of the present disclosure.

A third aspect of the present disclosure provides an electrical apparatus, including the battery provided in the second aspect of the present disclosure.

The electrical apparatus in the present disclosure includes the battery provided by the present disclosure, and thus has at least the same advantages as the battery.

### BRIEF DESCRIPTION OF THE DRAWINGS

In order to more clearly illustrate the technical solutions in the embodiments of the present disclosure, drawings required to be used in the embodiments of the present disclosure are briefly described below. It is clear that the drawings described below show only some embodiments of the present disclosure, and those of ordinary skill in the art may further derive other drawings from the drawings without creative effort.
FIG. 1 is a schematic diagram of a battery cell provided by some embodiments of the present disclosure.
FIG. 2 is a schematic structural diagram of an electric apparatus provided according to some embodiments of the present disclosure.

The figures are not necessarily drawn to the actual scale. Description of reference numerals: 5, battery cell.

### DETAILED DESCRIPTION OF PREFERRED EMBODIMENTS

Hereinafter, implementations specifically disclosing a battery cell, a battery, and an electric apparatus in the present disclosure are described in detail with reference to the drawings as appropriate. However, an unnecessary detailed description may be omitted. For example, a detailed description of well-known matters and repeated descriptions of a substantially same structure may be omitted. This is to avoid the following descriptions from becoming unnecessarily redundant and to facilitate understanding by those skilled in the art. In addition, the accompanying drawings and the following descriptions are provided for those skilled in the art to fully understand the present disclosure, and are not intended to limit the subject matter described in the claims.

The "range" disclosed in the present disclosure is limited in the form of a lower limit and an upper limit. A given range is limited by selecting a lower limit and an upper limit, which define the boundaries of the specific range. A range defined in this manner may include an end value or may not include an end value, and may be any combination, that is, any lower limit may be combined with any upper limit to form a range. For example, if the ranges of 60-120 and 80-110 are listed for a specific parameter, it is understood that the ranges of 60-110 and 80-120 are also expected. In addition, if the minimum range values of 1 and 2 are listed, and if the maximum range values of 3, 4, and 5 are listed, the following ranges may all be expected: 1-3, 1-4, 1-5, 2-3, 2-4, and 2-5. In the present disclosure, unless otherwise stated, a numerical range "a to b" represents a shorthand representation for a combination of any real numbers between a and b, where both a and b are real numbers. For example, the numerical range of "0-5" represents that all real numbers between "0-5" have been listed herein, and "0-5" is only a shortened representation of these numerical combinations. In addition, when a parameter is expressed as an integer ≥ 2, it is equivalent to disclosing that the parameter is an integer such as 2, 3, 4, 5, 6, 7, 8, 9, 10, 11, or 12.

Unless otherwise specified, all implementations and optional implementations of the present disclosure may be combined with each other to form new technical solutions, and it is conceivable that such technical solutions should be included in the disclosure of the present disclosure.

Unless otherwise specified, all technical solutions and optional technical solutions of the present disclosure may be combined with each other to form new technical solutions, and it is conceivable that such technical solutions should be included in the disclosure of the present disclosure.

Unless otherwise specified, all steps in the present disclosure may be performed sequentially or randomly, preferably sequentially. For example, the method includes steps (a) and (b), meaning that the method may include steps (a) and (b) performed sequentially or steps (b) and (a) performed sequentially. For example, the mentioned method may further include step (c), meaning that step (c) may be added to the method in any order, e.g. the method may include steps (a), (b) and (c), or steps (a), (c) and (b), or steps (c), (a) and (b), etc.

In the present disclosure, the terms "first", "second", and the like are used to distinguish different objects and are not intended to describe a particular order or primary/secondary relationship, unless otherwise specified.

In the present disclosure, the terms "a plurality of" and "various" mean two or more.

In the description of the embodiments of the present disclosure, unless otherwise specified, a first feature being "above" or "below" a second feature may mean that the first feature is in direct contact with the second feature, or the first feature is in indirect contact with the second feature through an intermediate medium. Moreover, the first feature being "over", "above", or "on" the second feature may be that the first feature is directly above or diagonally above the second feature, or merely indicate that the first feature is horizontally higher than the second feature. The first feature being "below", "under", or "beneath" the second feature may be that the first feature is directly below or diagonally below the second feature, or merely indicate that the first feature is horizontally lower than the second feature.

Unless otherwise specified, the terms used in the present disclosure have the meaning commonly understood by those skilled in the art.

Unless otherwise specified, the numerical values of each parameter mentioned in the present disclosure may be measured by various test methods commonly used in the art, for example, they may be measured according to the test methods provided in the embodiments of the present disclosure. The test temperature for each parameter is 25°C, unless otherwise specified.

In the present disclosure, the terms "layered lithium-containing transition metal oxide with a monocrystalline morphology" and "layered lithium-containing transition metal oxide with a polycrystalline morphology" are both well-known in the art.

The "layered lithium-containing transition metal oxide with a monocrystalline morphology" also includes a layered lithium-containing transition metal oxide with a quasi-single crystal (also called a single-crystal-like) morphology, and the quasi-single crystal (single-crystal-like) is a well-known meaning in the art, and generally refers to a particle formed by agglomeration of a small number (for example, 2-5) of primary particles. The layered lithium-containing transition metal oxide with a polycrystalline morphology refers to a layered lithium-containing transition metal oxide with a secondary particle morphology formed by agglomeration of a plurality of primary particles.

The "layered lithium-containing transition metal oxide with a monocrystalline morphology" and the "layered lithium-containing transition metal oxide with a polycrystalline morphology" may be distinguished by a scanning electron microscope.

Dv10, Dv50, and Dv90 of a material are well known in the art and may be tested using methods known in the art. For example, Dv10, Dv50, and Dv90 may be readily measured with reference to GB/T 19077-2016, using a laser particle size analyzer (e.g., Malvern Mastersizer 3000). The physical definition of Dv90 is the particle size corresponding to a cumulative volume distribution percentage of the secondary particles of the positive electrode active material reaching 90%; the physical definition of Dv50 is the particle size corresponding to a cumulative volume distribution percentage of the secondary particles of the positive electrode active material reaching 50%, and the physical definition of Dv10 is the particle size corresponding to a cumulative volume distribution percentage of the secondary particles of the positive electrode active material reaching 10%. During test, an appropriate amount of the sample to be tested (ensuring 8% to 12% opacity) is taken, 20 ml of deionized water is added, and an external ultrasonic treatment is performed more than 5 min (for example, 53KHz/120W) to completely disperse the sample to be tested.

The specific surface area of the material has a meaning well known in the art, and may be measured using an instrument or a method known in the art. For example, with reference to GB/T 19587-2017, the specific surface area is obtained by performing a test using a specific surface area analysis and test method based on nitrogen adsorption and performing calculation using a BrunauerEmmett Teller (BET) method. Optionally, the specific surface area testing method with nitrogen adsorption may be performed by a Tri-Star 3020 Specific Surface Area Pore Size Analysis Tester from Micromeritics, USA.

It should be noted that, in the embodiments of the present disclosure, various parameters of the separator, the positive electrode sheet, the negative electrode sheet, and the like may be tested during the preparation of the battery cell, or may be tested after disassembling various components from the prepared battery cell.

A battery mentioned in the embodiments of the present disclosure may be a single physical module including one or a plurality of battery cells to provide a higher voltage and capacity. For example, the battery mentioned in the present disclosure may include a battery cell, a battery module, a battery pack, or the like. The battery cell is a minimum unit constituting a battery, which can implement charge and discharge functions alone. When there are a plurality of battery cells, the plurality of battery cells are connected in series, in parallel, or in series-parallel via a busbar component. In some embodiments, the battery may be a battery module; and when there are a plurality of battery cells, the plurality of battery cells are arranged and fixed to form a battery module. In some embodiments, the battery may be a battery pack including a box and a battery cell, and the battery cell or the battery module is accommodated in the box. In some embodiments, the box may be a part of a chassis structure of a vehicle. For example, a part of the box body may be at least part of a chassis of a vehicle, or a part of the box body may be at least part of a transverse beam and a longitudinal beam of a vehicle.

In some embodiments, the battery may be an energy storage device. The energy storage device includes an energy storage container, an energy storage cabinet, and the like.

The battery cell mentioned in the embodiments of the present disclosure may include a lithium-ion battery cell.

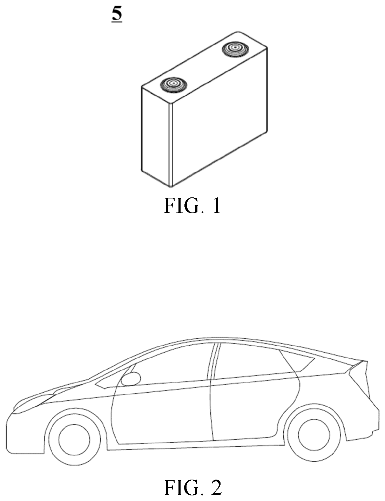

The battery cell may be of a rectangular parallelepiped structure or a soft package structure, which is not limited in the embodiments of the present disclosure. FIG. 1 shows a battery cell 5 of a cuboid structure as an example.

The battery cell includes an electrode assembly and an outer package . The electrode assembly includes a positive electrode sheet, a negative electrode sheet, and a separator. The separator is arranged between the positive electrode sheet and the negative electrode sheet, to mainly prevent positive and negative electrodes from being short-circuited and allow ions to pass through freely to form a circuit.

In some embodiments, the electrode assembly may be of a wound structure or a laminated structure.

The outer package may be configured to package the electrode assembly. In some embodiments, the outer package may be made of a soft package material or a hard shell material. The soft package material may be a plastic, such as one or more of polypropylene (PP), polybutylene terephthalate (PBT), and polybutylene succinate (PBS). The hard shell material may include, but is not limited to, a hard plastic shell, an aluminum shell, or a steel shell.

In some embodiments, the outer package may be made of a hard shell material.

The outer package may include a housing and an end cap assembly. The housing may be a hollow structure with an opening in one side, and the end cap assembly covers the opening of the housing and forms a sealed connection to form an accommodating cavity for accommodating the electrode assembly.

The outer package may further include a housing and two end cap assemblies, the housing is a hollow structure with openings in two opposite sides, and one end cap assembly is correspondingly covered at one opening of the housing and forms a sealed connection to form an accommodating cavity for accommodating the electrode assembly.

The end cap assembly may include an end cap, and the end cap is covered at the opening of the housing. The end cap may be various structures, for example, the end cap may be a plate-shaped structure or a hollow structure with an opening in one end. The end cap may be made of an insulating material (for example, a plastic), or may be made of a conductive material (for example, a metal material). When the end cap is made of a conductive material, the end cap assembly may further include an insulating member, and the insulating member is located on a side of the end cap facing the electrode assembly to insulate the end cap from the electrode assembly.

The end cap assembly may further include electrode terminals, and the electrode terminals are mounted on the end cap. There may be two electrode terminals, which are respectively defined as a positive electrode terminal and a negative electrode terminal, and both the positive electrode terminal and the negative electrode terminal are configured to be electrically connected to the electrode assembly to output electric energy generated by the electrode assembly. The positive electrode terminal and the negative electrode terminal may be located at the same end of the battery cell, or may be located at opposite ends of the battery cell.

The electrode assembly includes a main body portion and a tab portion extending from the main body portion. In some embodiments, the number of the tab portions may be two. The two tab portions are defined as a positive electrode tab portion and a negative electrode tab portion, respectively. The two tab portions may extend from the same end of the main body portion of the electrode assembly, for example, the two tab portions extend from an end of the main body portion of the electrode assembly close to the end cap assembly. The two tab portions may also extend from two opposite ends of the main body portion of the electrode assembly, for example, extend from two opposite ends of the main body portion of the electrode assembly in the length direction of the battery cell. Therefore, the positive electrode tab portion and the negative electrode tab portion can be wider (that is, the size in the non-extending direction of the main body portion is larger), which is beneficial to improving the electronic conductivity of the electrode sheet. When the two tab portions extend from two opposite ends of the main body portion of the electrode assembly, the electrode terminals may be located at the same end of the battery cell, or may be located at two opposite ends of the battery cell.

The main body portion is a core portion of the electrode assembly that implements charging and discharging functions, and the tab portions are configured to lead out a current generated by the main body portion. The main body portion includes a positive electrode current collecting portion of a positive electrode current collector, a positive electrode film layer, a negative electrode current collecting portion of a negative electrode current collector, a negative electrode film layer, a separator, and the like. The positive electrode tab portion may include a plurality of positive electrode tabs, and the negative electrode tab portion may include a plurality of negative electrode tabs.

The tab portions are electrically connected to the electrode terminals. The tab portions may be directly connected to the electrode terminals by way of welding or the like, or may be indirectly connected to the electrode terminals via other members. For example, the electrode assembly further includes a current collecting member, and the current collecting member is configured to electrically connect the electrode terminals and the tab portions. There may be two current collecting members, and the two current collecting members are respectively defined as a positive electrode current collecting member and a negative electrode current collecting member, the positive electrode current collecting member is configured to electrically connect the positive electrode terminal and the positive electrode tab portion, and the negative electrode current collecting member is configured to electrically connect the negative electrode terminal and the negative electrode tab portion. When the battery cell is provided with a plurality of electrode assemblies, the positive electrode current collecting members of the plurality of electrode assemblies may be integrally arranged, and the negative electrode current collecting members of the plurality of electrode assemblies may be integrally arranged.

The separator includes a porous substrate and a coating arranged on at least one surface of the porous substrate, the coating including nanocellulose and a granular filler.

A width of the separator is denoted as A, a width of the negative electrode sheet is denoted as B, both are in units of mm, and 0<A-B≤5 mm.

The difference in width between the separator and the negative electrode sheet of the battery cell provided by the embodiment of the present disclosure is less than or equal to 5 mm. Since the difference in width between the separator and the negative electrode sheet is reduced, the probability of the separator having local redundancy, folding or breakage problems during the assembly process of the battery cell is reduced, such that the battery cell can have good processing property. Moreover, when the inner space of the battery cell is the same and the width of the separator is the same, since the difference in width between the separator and the negative electrode sheet is reduced, the coating width of the negative electrode sheet and the positive electrode sheet is increased, thereby enabling the battery cell to have a high volumetric energy density. In addition, after the volumetric energy density of the battery cell is improved, the design space of the battery module and the battery pack can be further increased, and the overall life and reliability of the battery can be further improved, for example, some components for improving the overall reliability of the battery can be arranged in the limited space of the battery module and the battery pack.

The coating of the separator used in the battery cell provided by the embodiment of the present disclosure includes nanocellulose and a granular filler. The nanocellulose has good high-temperature resistance and small volume change after being heated, thereby improving the heat resistance of the separator. The nanocellulose is less in density, thereby reducing the mass of the battery cell and improving the gravimetric energy density of the battery cell. In addition, the nanocellulose itself contains a large number of hydroxyl, and thus can also be overlapped with each other to form a three-dimensional skeleton structure, and further, by matching with the granular filler, the mechanical strength and puncture resistance of the separator can also be improved. The nanocellulose itself contains a large number of hydroxyl, and can be connected to the granular filler, the porous substrate, and the like through acting forces such as hydrogen bonds and the van der Waals force, thereby further enhancing the bonding strength between the granular fillers in the coating and between the coating and the porous substrate, solving the powder falling problem, and improving the processability of the separator and the battery cell. Therefore, the battery cell provided by the embodiment of the present disclosure may also have high reliability.

0<A-B≤5 mm. For example, A-B may be 2 mm, 2.5 mm, 2.7 mm, 3.1 mm, 3.5 mm, 3.8 mm, 4 mm, 4.5 mm, 5 mm, or a range formed by any of the above values.

Optionally, 2 mm≤ A-B≤ 4 mm. More optionally, 2.5 mm≤A-B≤ 3.5 mm. This helps further improve the volumetric energy density and processability of the battery cell.

### [Separator]

In some embodiments, a material of the porous substrate includes polyolefin, optionally polyethylene.

The currently used ultra-thin separator uses a polyolefin resin as a main raw material, and the polyolefin resin has a low melting point, and thus can have good processability, but the thermal shrinkage of the separator prepared therefrom is usually large, and when the separator is applied to a battery cell, the width of the separator needs to be designed to be relatively great, thereby increasing the difficulty of assembling the battery cell. The porous substrate provided by the embodiments of the present disclosure can also have a higher strength and a higher heat resistance on the premise of having a less thickness, thereby helping the separator have both a low thickness and high heat resistance, and also helping the battery cell have both a high energy density, a good processability, and a high reliability.

In some embodiments, a thickness of the porous substrate is less than or equal to 5 µm, optionally 3 µm to 4.5 µm.

In some embodiments, a puncture strength of the porous substrate is greater than or equal to 390 gf, optionally 400 gf to 480 gf.

The higher the puncture strength of the porous substrate is, the better the puncture resistance of the porous substrate is, which can effectively prevent the positive and negative electrode particles and metal foreign particles from puncturing the separator to cause the positive electrode and the negative electrode to be short-circuited. Therefore, the puncture strength of the porous substrate within the above range can improve the pass rate of the short circuit test of the battery cell and improve the reliability of the battery cell.

In some embodiments, the longitudinal (MD) thermal shrinkage rate of the porous substrate at 105°C for 1 h may be less than or equal to 3%, optionally 1% to 2.5%.

In some embodiments, the transverse (TD) thermal shrinkage rate of the porous substrate at 105°C for 1 h may be less than or equal to 2%, optionally 1% to 1.8%.

The decrease of the thermal shrinkage rate of the porous substrate represents good heat resistance of the porous substrate, thereby improving the pass rate of the short circuit test of the battery cell and improving the reliability of the battery cell.

The porosity of the porous substrate has the meaning well-known in the art and may be tested using methods known in the art. For example, the porosity of the porous substrate may be tested with reference to GB/T 36363-2018.

In some embodiments, the longitudinal tensile strength of the porous substrate may be greater than or equal to 2,700 kgf/cm², optionally 2,800 kgf/cm² to 3,500 kgf/cm².

In some embodiments, a transverse tensile strength of the porous substrate is greater than or equal to 2,500 kgf/cm², optionally 2,600 kgf/cm² to 3,200 kgf /cm².

The increase of the tensile strength of the porous substrate is beneficial to effectively coating the positive and negative electrode particles, thereby effectively reducing the short circuit between the positive electrode and the negative electrode and improving the reliability of the battery cell.

The tensile strength of the porous substrate has the meaning well-known in the art and may be tested using methods known in the art. For example, the tensile strength of the porous substrate may be tested with reference to GB/T 36363-2018.

In some embodiments, an average pore size of the porous substrate is 10 nm to 60 nm, optionally 20 nm to 40 nm.

The average pore size of the porous substrate has the meaning well-known in the art and may be tested using methods known in the art. For example, the average pore size of the porous substrate may be tested using a capillary flow pore size analyzer, and the testing instrument may be a PMI Porometer pore size tester.

In some embodiments, a porosity of the porous substrate is 20% to 60%, optionally 30% to 50%.

The porosity of the porous substrate has the meaning well-known in the art and may be tested using methods known in the art. For example, the porosity of the porous substrate may be tested with reference to GB/T 36363-2018.

The coating includes nanocellulose and a granular filler. In some embodiments, a mass content of the nanocellulose in the coating may be 5 wt% to 60 wt%, optionally 7 wt% to 45 wt%. In some embodiments, a mass content of the granular filler in the coating may be greater than 38 wt%, and optionally 53 wt% to 91 wt%.

The mass contents of the nanocellulose and the granular filler within the above ranges can enable the separator to have high heat resistance and good ion transmission characteristic, and thus can enable the battery cell to have good cycle performance, and is also beneficial for the coating to have an appropriate viscosity, which is beneficial to coating, and is also beneficial to maintaining a high bonding strength between the coating and the porous substrate, thereby improving the structural stability of the separator; and is also beneficial for the nanocellulose and the granular filler to be overlapped to form an integrated coating, such that the coating has a more stable spatial network structure.

In some embodiments, an average length of the nanocellulose may be 100 nm to 1200 nm, optionally 200 nm to 1000 nm, 200 nm to 800 nm, 200 nm to 600 nm, and 300 nm to 600 nm.

By adjusting the average length of the nanocellulose within the above range, it is beneficial for the nanocellulose to be overlapped to form a three-dimensional skeleton structure, and it is also beneficial for the three-dimensional skeleton structure and the granular filler to be overlapped to form an integrated coating, which is beneficial to improving the heat resistance of the separator, and is further beneficial to reducing the risk of short circuit failure during the use of the battery cell, and is also beneficial to improving the cycle performance of the battery cell. By adjusting the average length of the nanocellulose within the above range, it is also beneficial for a coating slurry to have an appropriate viscosity, thereby facilitating coating, and it is also beneficial to improving the uniformity and consistency of the coating.

In some embodiments, an average diameter of the nanocellulose may be 11 nm to 40 nm, optionally 15 nm to 32 nm.

By adjusting the average diameter of the nanocellulose within the above range, it is beneficial for the nanocellulose to be overlapped to form a three-dimensional skeleton structure, and it is also beneficial for the three-dimensional skeleton structure and the granular filler to be overlapped to form an integrated coating, which is beneficial to improving the heat resistance of the separator, and is further beneficial to reducing the risk of short circuit failure during the use of the battery cell, and is also beneficial to improving the cycle performance of the battery cell.

In some embodiments, an aspect ratio of the nanocellulose is 5 to 60, optionally 12 to 35.

By adjusting the aspect ratio of the nanocellulose within the above range, it is beneficial for the nanocellulose to be overlapped to form a three-dimensional skeleton structure, and it is also beneficial for the formed three-dimensional skeleton structure and the granular filler to be overlapped to form an integrated coating, which is beneficial to improving the heat resistance of the separator, and is further beneficial to reducing the risk of short circuit failure during the use of the battery cell, and is also beneficial to improving the cycle performance of the battery cell. By adjusting the aspect ratio of the nanocellulose within the above range, it is also beneficial to improving the electrolyte wettability of the separator, thereby facilitating ion transmission and reducing dendrites.

The average length and average diameter of the nanocellulose may be measured by the following method: cutting a sample of 3.6 mm×3.6 mm from any region of the separator, mapping a microscopic morphology structure of the coating in the sample by a scanning electron microscope e.g., ZEISS Sigma 300), and selecting a high vacuum mode, where an operating voltage is 3 kV, and a magnification is 30,000 times to obtain an SEM image; selecting a plurality of test regions (e.g., 5 or more) for length statistics according to the obtained SEM image, where the size of each test region is 0.5 µm×0.5 µm, and then taking the average value of the lengths of the nanocellulose obtained from each test region as the average length of the nanocellulose; and according to the obtained SEM image, selecting a plurality of test regions (e.g., 5 or more) for diameter statistics by means of Nano Measurer particle size distribution statistical software, where the size of each test region is 0.5 µm×0.5 µm, and then taking the average value of the diameters of the nanocellulose obtained from each test region as the average diameter of the nanocellulose.

In some embodiments, the nanocellulose may include a modifying group, and the modifying group may include at least one of amino, carboxyl, aldehyde, a sulfonic acid group or a phosphate group, and optionally includes at least one of a sulfonic acid group or a phosphate group.

When the nanocellulose has the above specific modifying group, on the one hand, the heat resistance of the separator can be effectively improved, the thermal stability of the battery cell can be improved, and the risk of short circuit failure during the use of the battery cell can be reduced, and on the other hand, the bonding strength between the coating and the porous substrate can also be improved.

When the nanocellulose has the above specific modifying group, it is also beneficial for the nanocellulose to be overlapped with the granular filler to form an integrated coating, such that the coating can have a stable spatial network structure, which is beneficial to improving the wettability and liquid retention of the electrolyte solution of the separator, improving the ion transmission characteristic and the voltage withstand breakdown characteristic of the separator, and is also beneficial to matching the high-voltage positive electrode active material, and further improving the energy density of the battery cell.

In addition, the presence of the modifying group can also reduce the proportion of hydroxyl, which is beneficial for the coating slurry to have an appropriate viscosity and is more beneficial for coating, thereby improving the production efficiency of the separator and improving the uniformity and consistency of the coating.

In some embodiments, the nanocellulose includes hydroxyl and the modifying group, and a molar ratio of the modifying group to the hydroxyl may be 1:4 to 4:1, optionally 2:3 to 7:3.

When the molar ratio of the modifying group to the hydroxyl is within the above range, heat resistance, ion transmission characteristic, electrolyte solution wettability, and liquid retention of the separator can be further improved, thereby helping reduce a risk of a short circuit failure during the use of the battery cell, and also helping improve the cycle performance of the battery cell.

The type of the modifying group in the nanocellulose may be measured by infrared spectroscopy. For example, an infrared spectrum of the material may be tested to determine a characteristic peak contained therein, thereby determining the type of the modifying group. Specifically, the material may be analyzed by infrared spectroscopy using instruments and methods well known in the art, for example, an infrared spectrometer (such as an IS10 Fourier transform infrared spectrometer from Ni-Non Koriki Co., Ltd., USA) is used to perform the test according to the general rules of infrared spectroscopy analysis method GB/T 6040-2019.

The molar ratio of the modifying group to the surface hydroxyl in the nanocellulose may be measured by the following method: respectively testing hydroxyl values (the number of milligrams of potassium hydroxide equivalent to the hydroxyl content per gram of the sample) of the raw material cellulose and the nanocellulose according to a phthalic anhydride method in GB/T 12008.3-2009, where the obtained value unit is mg KOH/g, which is converted into mmol/g as a hydroxyl content. The content of the modifying group (i.e., the content of the modified hydroxyl) may be obtained by subtracting the hydroxyl content of the nanocellulose from the hydroxyl content of the raw material cellulose, and the molar ratio of the modifying group to the hydroxyl is calculated therefrom.

In some embodiments, the nanocellulose includes a sulfonic acid group, and the content of sulfur element may be ≥0.1 wt%, optionally 0.2 wt% to 0.5 wt%, based on the total mass of the nanocellulose.

The content of the sulfur element in the nanocellulose may be tested according to the following method: after the nanocellulose is dried, grinding the nanocellulose in a mortar (such as an agate mortar) for 30 min, and then testing the nanocellulose by an X-ray diffractometer (such as Miniflex 600 c) to obtain the content of the sulfur element. During the test, a Cu target and a Ni filter may be used, the tube pressure is 40 KV, the tube current is 15 mA, and the continuous scanning range is 5° to 80°.

In some embodiments, a weight-average molecular weight of the nanocellulose may be 10,000 to 60,000, optionally 30,000 to 50,000.

The weight-average molecular weight of the nanocellulose is within the above range, such that the coating slurry has an appropriate viscosity, and the coating slurry has good fluidity and wettability during coating, thereby facilitating the improvement of the quality of the coating, and further facilitating the improvement of the heat resistance and ion transmission characteristic of the separator.

In some embodiments, the nanocellulose may be obtained according to the following method: providing a cellulose powder with a whiteness ≥80%; mixing and reacting the obtained cellulose powder with a modifying solution; washing the mixture to remove impurities; then adjusting the pH value to be neutral; and grinding and cutting the mixture to obtain the nanocellulose.

Optionally, the above cellulose powder with the whiteness ≥80% may be obtained by commercial purchase, or obtained by chemical methods (such as acid hydrolysis, alkali treatment, and Tempo catalytic oxidation), biological methods (such as enzyme treatment), mechanical methods (such as ultrafine grinding, ultrasonic crushing, and high-pressure homogenization), or the like. A fiber raw material for preparing the above cellulose powder with the whiteness ≥80% may include plant fibers, such as at least one of cotton fibers (e.g., cotton fibers, Kapok fibers), hemp fibers (e.g., sisal fibers, ramie fibers, jute fibers, flax fibers, hemp fibers, abaca fibers, etc.), brown fibers, wood fibers, bamboo fibers, and grass fibers.

In some embodiments, the above cellulose powder with the whiteness ≥80% may also be prepared by the following method: opening and removing the residue from the fiber raw material; cooking the fiber raw material with an alkaline solution (for example, an aqueous NaOH solution, the concentration of which may be 4 wt% to 20 wt%, optionally 5 wt% to 15 wt%); and then sequentially washing the fiber raw material with water to remove impurities (for example, the washing number of time is 3 to 6), bleaching (for example, with sodium hypochlorite and/or hydrogen peroxide), acid washing to remove impurities, water washing to remove impurities, water displacement, and airflow drying to obtain the cellulose powder.

In some embodiments, the modifying solution may be an acid solution (e.g., an aqueous sulfuric acid solution, an aqueous phosphoric acid solution, an aqueous acetic acid solution) or an alkali solution (e.g., a urea organic solvent solution). Optionally, the modifying solution is an acid solution.

Optionally, a concentration of the acid solution may be 5 wt% to 80 wt%. When the modifying solution is an aqueous sulfuric acid solution, the concentration of the acid solution may be 40 wt% to 80 wt%, whereby a cellulose powder having a sulfonic acid group may be obtained. When the modifying solution is an aqueous phosphoric acid solution, the concentration of the acid solution may be 45 to 75 wt%, whereby a cellulose powder having phosphoric acid groups may be obtained. When the modifying solution is an aqueous acetic acid solution, the concentration of the acid solution may be 40 wt% to 80 wt%, whereby a cellulose powder having a carboxylic acid group may be obtained.

Optionally, the urea organic solvent solution may be a urea xylene solution, whereby a cellulose powder having amino may be obtained.

In some embodiments, optionally, a mass ratio of the cellulose powder to the modifying solution may be 1: 2.5 to 1: 50, optionally 1: 5 to 1: 30.

When the modifying solution is an aqueous sulfuric acid solution, the mass ratio of the cellulose powder to the acid solution may be 1: 5 to 1: 30. When the modifying solution is an aqueous phosphoric acid solution, the mass ratio of the cellulose powder to the acid solution may be 1: 5 to 1: 30. When the modifying solution is an acetic acid aqueous solution, the mass ratio of the cellulose powder to the acid solution may be 1: 5 to 1: 30. When the modifying solution is a urea organic solvent solution, the mass ratio of the cellulose powder to the urea organic solvent solution may be 1: 4 to 1: 40.

In some embodiments, when the modifying solution is an acid solution, the reaction may be performed at a temperature not higher than 80°C, optionally at a temperature of 30°C to 60°C, and the reaction time of the cellulose powder and the modifying solution may be 0.25 h to 4 h, optionally 0.5 h to 3 h.

In some embodiments, when the modifying solution is an alkaline solution, the reaction may be performed at 100°C to 145°C, and the reaction time of the cellulose powder and the modifying solution may be 0.5 h to 5 h.

In some embodiments, grinding may be performed by a grinder, and cutting may be performed by a high-pressure homogenizer. Nanocellulose having different average diameters and/or different average lengths can be obtained by adjusting the grinding parameters of the grinder (e.g., number of grinding, grinding time, etc.) and the cutting parameters of the high-pressure homogenizer.

In some embodiments, the granular filler may include one or more of organic particles, inorganic particles, and an organic-inorganic composite material.

In some embodiments, the granular filler may include a first component with a secondary particle morphology and a second component with a primary particle morphology.

The first component with the secondary particle morphology can be better overlapped with the three-dimensional skeleton structure formed by the nanocellulose to form an integrated effect, such that the coating can have a more stable spatial network structure, thereby further improving the heat resistance of the separator and the thermal stability of the battery cell.

The second component with the primary particle morphology is beneficial to reducing the moisture content of the coating and improving the ion transmission characteristic of the coating, thereby helping improve the cycle performance of the battery cell.

In some embodiments, an average particle size of the first component with the secondary particle morphology is less than an average particle size of the second component with the primary particle morphology.

This is beneficial to better play the role of the first component with the secondary particle morphology and the second component with the primary particle morphology.

The first component with the secondary particle morphology has a smaller particle size and better affinity with the nanocellulose, and the nanocellulose can also be overlapped in the gaps between the primary particles in the first component constituting the secondary particle morphology, thereby helping the nanocellulose and the first component with the secondary particle morphology be overlapped to form an integrated coating, such that the coating has a more stable spatial network structure, thereby further improving the heat resistance of the separator.

The second component with the primary particle morphology has a larger particle size and higher strength, which can better play a role of skeleton support in the coating, reduce the thermal shrinkage of the separator and improve the heat resistance of the separator, and also help the coating have more pore structures and less moisture content, thereby further improving the ion transmission characteristic of the separator.

In some embodiments, the average particle size of the first component with the secondary particle morphology is less than 200 nm, optionally 80 nm to 180 nm. The average particle size of the first component with the secondary particle morphology within the above range can make it have a higher specific surface area, and can also better match and overlap with the three-dimensional skeleton structure formed by the nanocellulose to form an integrated effect, thereby increasing the heat resistance of the separator and the wetting and retention characteristics of the separator to the electrolyte solution, thereby helping improve the thermal stability and cycle performance of the battery cell.

In some embodiments, a particle size of the primary particles in the first component constituting the secondary particle morphology may be 15 nm to 45 nm, optionally 20 nm to 35 nm. The particle size of the primary particles in the first component constituting the morphology of the secondary particles is within the above range, such that the first component can have a good secondary particle morphology, which is beneficial for the first component to be better overlapped with the three dimensional skeleton structure formed by the nanocellulose to form an integrated effect.

In some embodiments, the average particle size of the second component with the primary particle morphology may be 200 nm to 600 nm, optionally 300 nm to 500 nm. The average particle size of the second component with the primary particle morphology within the above range can better play a supporting role of the second component with primary particle morphology, such that the coating maintains a stable pore structure during long-term charging and discharging, thereby facilitating the reduction of the moisture content of the separator and the promotion of ion transmission, and also improving the heat resistance of the separator.

The average particle size of the first component with the secondary particle morphology and the second component with the primary particle morphology may be tested by using equipment and methods known in the art. For example, the microscopic morphology structure of the coating in the sample may be mapped by using a scanning electron microscope (for example, ZEISS Sigma 300), and with reference to JY/T 0584-2020, a scanning electron microscope (SEM) image of the coating of the separator is obtained, the longest diagonal length of the particles is measured by the SEM image and then the average value is taken, and the number of the selected particles may be greater than 100.

In some embodiments, the specific surface area of the first component with the secondary particle morphology may be greater than the specific surface area of the second component with the primary particle morphology. This is beneficial to better play the role of the first component with the secondary particle morphology and the second component with the primary particle morphology.

In some embodiments, the specific surface area of the first component with the secondary particle morphology is greater than 20 m²/g, optionally 30 m²/g to 80 m²/g. The specific surface area of the first component with the secondary particle morphology is within the above range, which has better affinity with the nanocellulose, and can also better match and overlap with the three-dimensional skeleton structure formed by the nanocellulose to form an integrated effect, thereby increasing the heat resistance of the separator and the wetting and retention characteristics of the separator to the electrolyte solution, thereby helping improve the thermal stability and cycle performance of the battery cell.

In some embodiments, the specific surface area of the second component with the primary particle morphology may be less than or equal to 20 m²/g, optionally 5 m²/g to 15 m²/g. The specific surface area of the second component with the primary particle morphology is within the above range, which is beneficial to reducing the moisture content of the separator, and also beneficial to improving the heat resistance of the separator.

In some embodiments, a mass content of the first component with the secondary particle morphology in the coating may be greater than a mass content of the second component with the primary particle morphology in the coating. This is beneficial to better play the role of the first component with the secondary particle morphology and the second component with the primary particle morphology.

In some embodiments, the mass content of the first component with the secondary particle morphology in the coating may be 10 wt% to 85 wt%, optionally 20 wt% to 75 wt%. The mass content of the first component with the secondary particle morphology is within the above range, which is beneficial for the coating slurry to have an appropriate viscosity and is further beneficial to coating; in addition, it is also beneficial to be overlapped with the three-dimensional skeleton structure formed by the nanocellulose to form an integrated effect, such that the coating can have a more stable spatial network structure, thereby improving the heat resistance and ion transmission characteristic of the separator.

In some embodiments, the mass content of the second component with the primary particle morphology in the coating may be 5 wt% to 70 wt%, optionally 7 wt% to 60 wt%. The mass content of the second component with the primary particle morphology within the above range can better play a supporting role of the second component with primary particle morphology, such that the coating maintains a stable pore structure during long-term charging and discharging, thereby facilitating the reduction of the moisture content of the separator and the promotion of ion transmission. The mass content of the second component with the primary particle morphology within the above range can also improve the overall bulk density of the granular filler, and further improve the heat resistance and puncture resistance of the separator.

In addition, by adjusting the contents of the nanocellulose, the first component with the secondary particle morphology and the second component with the primary particle morphology within the above ranges, the coating may have a relatively less thickness while having highly developed pores, thereby further improving the electrolyte solution wettability of the separator.

In some embodiments, the first component with the secondary particle morphology may include one or more of inorganic particles and organic particles.

Optionally, the inorganic particles include one or more of boehmite (γ-AlOOH), alumina (Al₂O₃), barium sulfate (BaSO₄), magnesium oxide (MgO), magnesium hydroxide (Mg(OH)₂), silicon oxide compound SiOₓ (0<x≤ 2), tin dioxide (SnO₂₎, titanium oxide (TiO₂₎, calcium oxide (CaO), zinc oxide (ZnO), zirconium oxide (ZrO₂₎, yttrium oxide (Y₂O₃), nickel oxide (NiO), hafnium oxide (HfO₂), cerium oxide (CeO₂), zirconium titanate (ZrTiO₃₎, barium titanate (BaTiO₃), and magnesium fluoride (MgF₂). More optionally, the inorganic particles include one or more of boehmite (γ-AlOOH), alumina (Al₂O₃), barium sulfate (BaSO₄), magnesium oxide (MgO), silicon oxide compound SiOₓ (0<x≤ 2), titanium oxide (TiO₂), zinc oxide (ZnO), cerium oxide (CeO₂), and barium titanate (BaTiO₃).

Optionally, the organic particles include one or more of polystyrene and polyacrylic wax.

In some embodiments, the first component with the secondary particle morphology may include inorganic particles with the secondary particle morphology and the crystal form of the inorganic particles with the secondary particle morphology includes at least two of α crystal form, θ crystal form, γ crystal form and η crystal form. Optionally, the crystal form of the inorganic particles with the secondary particle morphology includes at least two of α crystal form, θ crystal form, and γ crystal form.

In some embodiments, the mass content of the inorganic particles with the secondary particle morphology in the α crystal form in the organic particles with the secondary particle morphology may be ≥1.2wt%, optionally, 1.2 wt% to 10 wt%, and more optionally 1.2 wt% to 5 wt%, based on the total mass of the inorganic particles with the secondary particle morphology.

In some embodiments, the mass content of the inorganic particles with the secondary particle morphology in the θ crystal form in the organic particles with the secondary particle morphology may be ≥50wt%, optionally, 60 wt% to 85 wt%, and more optionally 60 wt% to 82.5 wt%, based on the total mass of the inorganic particles with the secondary particle morphology.

In some embodiments, the mass content of the inorganic particles with the secondary particle morphology in the γ crystal form in the organic particles with the secondary particle morphology may be ≥10wt%, optionally, 15 wt% to 60 wt%, and more optionally 15 wt% to 35 wt%, based on the total mass of the inorganic particles with the secondary particle morphology.

In some embodiments, the mass content of the inorganic particles with the secondary particle morphology in the η crystal form in the organic particles with the secondary particle morphology may be ≤5 wt%, optionally, ≤2 wt%, and more optionally ≤1 wt%, based on the total mass of the inorganic particles with the secondary particle morphology.

The inorganic particles with the secondary particle morphology in the α crystal form have the advantages of high hardness, good heat resistance, a low dielectric constant, high safety and a large true density; the inorganic particles with the secondary particle morphology in the θ crystal form has a moderate specific surface area and hardness, thereby being capable of improving the heat resistance and ion transport characteristic of the separator at the same time; and the inorganic particles with the secondary particle morphology in the γ and η crystal forms have the advantage of a large specific surface area. Therefore, by selecting the inorganic particles with the secondary particle morphology in different crystal forms is beneficial to improving at least one of the heat resistance, ion transmission characteristic, bonding strength, and electrolyte solution wettability of the separator.

In some embodiments, the first component with the secondary particle morphology may include inorganic particles with the secondary particle morphology, and the crystal form of the inorganic particles with the secondary particle morphology includes the α crystal form, the θ crystal form, the γ crystal form, and the η crystal form. The mass content of the inorganic particles with the secondary particle morphology in the α crystal form may be 1.2 wt% to 5 wt%, the mass content of the inorganic particles with the secondary particle morphology in the θ crystal form may be 60 wt% to 82.5 wt%, the mass content of the inorganic particles with the secondary particle morphology in the γ crystal form may be 15 wt% to 35 wt%, and the mass content of the inorganic particles with the secondary particle morphology in the η crystal form may be ≤1wt%, based on the total mass of the inorganic particles with the secondary particle morphology.

An X-ray diffraction pattern of the inorganic particles with the secondary particle morphology may be tested according to the following method: after drying the inorganic particles with the secondary particle morphology, grinding the inorganic particles with the secondary particle morphology in a mortar (such as an agate mortar) for 30 min; and then testing the inorganic particles with the secondary particle morphology with an X-ray diffractometer (such as Miniflex 600 c) to obtain the X-ray diffraction pattern. During the test, a Cu target and a Ni filter may be used, the tube pressure is 40 KV, the tube current is 15 mA, and the continuous scanning range is 5° to 80°.

In some embodiments, the first component with the secondary particle morphology may include inorganic particles with the secondary particle morphology, and the inorganic particles with the secondary particle morphology may be prepared according to the following method: subjecting a precursor solution of the inorganic particles to an oxidation reaction by high-pressure sputtering, followed by heating at 600°C to 900°C (for example, 1 h to 3 h) to form small particles; and then performing drying and shaping at 150°C to 250°C (for example, 30 min to 60 min) to obtain the inorganic particles with the secondary particle morphology. The average particle size of the inorganic particles with the secondary particle morphology may be adjusted by adjusting sputtering parameters such as temperature, time, and the like.

In some embodiments, the shape of the first component with the secondary particle morphology may include one or more of a string, a chain, amorphism, a sphere, a spheroid, and a pyramid.

In some embodiments, the second component with the primary particle morphology may include inorganic particles with the primary particle morphology.

Optionally, the inorganic particles with the primary particle morphology may include one or more of inorganic particles having a dielectric constant greater than 5, inorganic particles having ion conductivity but not storing ions, and inorganic particles capable of undergoing an electrochemical reaction.

Optionally, the inorganic particles having a dielectric constant greater than 5 include at least one of boehmite, alumina, zinc oxide, silicon oxide, titanium oxide, zirconium oxide, barium oxide, calcium oxide, magnesium oxide, nickel oxide, tin oxide, cerium oxide, yttrium oxide, hafnium oxide, aluminum hydroxide, magnesium hydroxide, silicon carbide, boron carbide, aluminum nitride, silicon nitride, boron nitride, magnesium fluoride, calcium fluoride, barium fluoride, barium sulfate, magnesium aluminum silicate, lithium magnesium silicate, sodium magnesium silicate, bentonite, hectorite, zirconium titanate, barium titanate, Pb (Zr, Ti)O₃ (abbreviated as PZT), Pb₁₋ₘLaₘZr₁₋ₙTiₙO₃ (abbreviated as PLZT, 0<m<1, 0<n<1), Pb (Mg₃Nb_{2/3})O₃-PbTiO₃ (abbreviated as PMN-PT), and their respective modified inorganic particles. Optionally, each inorganic particle may be modified by chemical modification and/or physical modification. The chemical modification means includes coupling agent modification (for example, using a silane coupling agent, a titanate coupling agent, and the like), surfactant modification, polymer graft modification, and the like. The physical modification means may be mechanical force dispersion, ultrasonic dispersion, high-energy treatment, and the like. Agglomeration of the inorganic particles can be reduced by the modifying treatment, thereby enabling the coating to have a more stable and uniform structure; and in addition, by selecting a coupling agent, a surfactant, or a polymer having a specific functional group to modify the inorganic particles, it also contributes to improving wetting and retention properties of the coating to the electrolyte solution and improving adhesion of the coating to the porous substrate.

Optionally, the inorganic particles having ion conductivity but not storing ions include at least one of Li₃PO₄, lithium titanium phosphate Liₓ₁Ti_{y1}(PO₄)₃, lithium titanium aluminum phosphate Liₓ₂Al_{y2}Ti_{z1}(PO₄)₃, (LiAlTiP)ₓ₃O_{y3} type glass, lithium lanthanum titanate Liₓ₄La_{y4}TiO₃, lithium germanium thiophosphate Liₓ₅Ge_{y5}P_{z2}S_{w}, lithium nitride Liₓ₆N_{y6}, SiS₂ type glass Liₓ₇Si_{y7}S_{z3} and P₂S₅ type glass Liₓ₈P_{y8}S_{z4}, 0<x1<2, 0 <y1<3, 0 <x2<2, 0<y2<1, 0 <z1<3, 0<x3<4, 0<y3<13, 0<x4<2, 0<y4<3, 0<x5<4, 0<y5<1, 0<z2<1, 0<w<5, 0<x6<4, 0<y6<2, 0<x7<3, 0<y7<2, 0<z3<4, 0<x8<3, 0<y8<3, 0<z4<7. Therefore, the ion transmission characteristic of the separator can be further improved.

Optionally, the inorganic particles capable of performing an electrochemical reaction include one or more of the following: a lithium-containing transition metal oxide, a lithium-containing phosphate, a carbon-based material, a silicon-based material, a tin-based material, and a lithium titanium compound.

In some embodiments, the second component with the primary particle morphology may include inorganic particles with the primary particle morphology, and the crystal form of the inorganic particles with the primary particle morphology may include one or more of an α crystal form and a γ crystal form, optionally the α crystal form. The inorganic particles with the primary particle morphology in the α crystal form have the advantages of high hardness, good heat resistance, a low dielectric constant, high safety and a large true density, thereby further improving the heat resistance of the coating.

In some embodiments, the crystal form of the inorganic particles with the primary particle morphology includes the α crystal form, and the mass content of the inorganic particles with the primary particle morphology in the α crystal form in the inorganic particles with the primary particle morphology may be ≥90 wt%, optionally 95 wt% to 100 wt%, based on the total mass of the inorganic particles with the primary particle morphology.

In some embodiments, the shape of the second component with the primary particle morphology may include at least one of a sphere, a dumbbell, and a polygon.

The inorganic particles in the α crystal form have diffraction peaks at 2θ of 57.48°±0.2° and 43.34°±0.2° in the X-ray diffraction pattern measured by using an X-ray diffractometer.

The inorganic particles in the θ crystal form have diffraction peaks at 2θ of 36.68°±0.2° and 31.21°±0.2° in the X-ray diffraction pattern measured by using an X-ray diffractometer.

The inorganic particles in the γ crystal form have diffraction peaks at 2θ of 66.95°±0.2° and 45.91°±0.2° in the X-ray diffraction pattern measured by using an X-ray diffractometer.

The inorganic particles in the η crystal form have diffraction peaks at 2θ of 31.89°±0.2° and 19.37°±0.2° in the X-ray diffraction pattern measured by using an X-ray diffractometer.

The X-ray diffraction pattern of the inorganic particles may be tested according to the following method: after drying the inorganic particles, grinding the inorganic particles in a mortar (such as an agate mortar) for 30 min; and then testing the inorganic particles with an X-ray diffractometer (such as Miniflex600-C) to obtain the X-ray diffraction pattern. During the test, a Cu target and a Ni filter may be used, the tube pressure is 40 KV, the tube current is 15 mA, and the continuous scanning range is 5° to 80°.

In some embodiments, the coating further includes a nongranular binder. The present disclosure has no particular limitation on the type of the nongranular binder, and any known material with a good binding property may be selected, for example, a linear binder, an emulsion binder, and a linear and emulsion mixed binder.

Optionally, the nongranular binder may have at least one polar group selected from hydroxyl (-OH), carboxyl (-COOH), an ester group (-COO-), cyano (-CN), an imide group (-CO-NH-CO-), a maleic anhydride group (-COOOC-), a sulfonate group (-SO₃H), and a pyrrolidone group (-NCO-).

Optionally, the nongranular binder may include a homopolymer or copolymer of a monomer selected from allyl polyether sulfate, acrylic acid, methacrylic acid, acrylamide, methyl acrylate, butyl acrylate, ethyl acrylate, glycidyl methacrylate, vinyl alcohol, acrylonitrile, hydroxyethyl acrylate, styrene, acetoxyethyl methacrylate, vinyltrimethoxysilane, lithium acrylate, sodium acrylate, lithium methacrylate, isobutylene, maleic anhydride.

Optionally, the nongranular binder may include at least one of polymethyl methacrylate, polyacrylonitrile, polyvinylpyrrolidone, polyvinyl acetate, polyethylene-co-vinyl acetate, polystyrene-co-methyl methacrylate, polystyrene-co-butyl acrylate, polyethylene oxide, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxymethyl cellulose, acrylonitrile-styrene-butadiene copolymer, and polyimide.

Optionally, the content of the nongranular binder in the coating may be less than or equal to 3 wt%, optionally 0.3 wt% to 1.5 wt%, based on the total mass of the coating. The nanocellulose and the granular filler in the coating can form a stable spatial network structure, such that the separator can maintain high bonding strength, a good ion transmission characteristic and high heat resistance while reducing the amount of the binder.

In some embodiments, the coating may not include a wetting agent, such as a common acrylate-based wetting agent or polyoxyethylene-polyoxypropylene block copolymer-based wetting agent. The wetting agent is usually a compound with low surface tension and high fluidity, which easily causes the problem of blocking the pores of the porous substrate during the coating and drying process of the coating slurry, and the coating of the separator provided by the embodiments of the present disclosure does not contain the wetting agent, which can avoid the problem of blocking the pores of the porous substrate due to the wetting agent during the coating and drying process of the coating slurry.

In some embodiments, the separator may further include a bonding layer, and the bonding layer is arranged on at least a part of a surface of the coating. The bonding layer can not only prevent the coating from falling off and improve the reliability of the battery cell, but also improve the interface between the separator and the electrode (such as the positive electrode and the negative electrode), thereby facilitating the improvement of the cycle performance of the battery cell.

In some implementations, the bonding layer may further include a binder. Optionally, the bonding layer may include a granular binder.

In some embodiments, the binder in the bonding layer may include at least one of an acrylate monomer homopolymer or copolymer, an acrylic monomer homopolymer or copolymer, and a fluorine-containing olefin monomer homopolymer or copolymer.

The comonomer may include, but is not limited to, at least one of an acrylate-based monomer, an acrylic-based monomer, an olefin monomer, a halogen-containing olefin monomer, a fluoropolyether-based monomer, and the like.

Optionally, the binder in the bonding layer may include a vinylidene fluoride-based polymer, such as a homopolymer of vinylidene fluoride monomer (VDF) and/or a copolymer of vinylidene fluoride monomer and comonomer. The comonomer may be at least one of an olefin monomer, a fluorine-containing olefin monomer, a chlorine-containing olefin monomer, an acrylate monomer, an acrylic monomer, and a fluoroether monomer.

Optionally, the comonomer may include at least one of trifluoroethylene (VF3), chlorotrifluoroethylene (CTFE), 1, 2-difluoroethylene, tetrafluoroethylene (TFE), hexafluoropropylene (HFP), perfluoro (alkyl vinyl) ethers (e.g., perfluoro(methyl vinyl)ether PMVE, perfluoro (ethyl vinyl)ether PEVE, perfluoro(propyl vinyl)ether PPVE), perfluoro(1,3-dioxole), and perfluoro(2, 2-dimethyl-1,3-dioxole) (PDD).

In some embodiments, the binder in the bonding layer may include at least one of polyvinylidene fluoride, polyvinylidene fluoride, polyvinylidene fluoride-co-hexafluoropropylene, polyvinylidene fluoride-co-trichloroethylene, polystyrene-co-methyl methacrylate, polystyrene-co-butyl acrylate, polymethyl methacrylate, polyacrylonitrile, polyvinyl acetate, polyethylene-co-vinyl acetate, polyimide, and polyethylene oxide.

In some implementations, a total thickness of the separator is 4 µm to 10 µm, optionally 4.5 µm to 8.5 µm. The total thickness of the coating within the above range can not only enable the battery cell to have a high energy density, but also enable the separator to have a low thermal shrinkage, such that the battery cell has a high reliability.

A common ceramic coating is arranged on the porous substrate, which can reduce the overall thermal shrinkage of the separator. However, this method usually requires a large thickness of the ceramic coating, which may sacrifice the energy density of the battery cell, and may also sacrifice the processability of the separator, for example, the separator has a high probability of powder shedding during winding. In some embodiments, the thickness of the coating of the separator provided by the embodiments of the present disclosure may be 0.2 µm to 2 µm, optionally 0.4 µm to 1 µm. The coating includes nanocellulose and a granular filler, such that the coating has both a low thickness and high heat resistance, and the battery cell can also have a good processability. The thickness of the coating within the above range can not only enable the battery cell to have a high energy density, but also enable the separator to have a low thermal shrinkage, such that the battery cell has a high reliability. The thickness of the coating refers to the thickness of the coating located on one side of the porous substrate.

In some embodiments, the longitudinal (MD) thermal shrinkage rate of the separator at 150°C for 1 h may be less than or equal to 3%.

In some embodiments, the transverse (TD) thermal shrinkage rate of the separator at 150°C for 1 h may be less than or equal to 2%.

The separator has a low thermal shrinkage rate at a high temperature, whereby it is possible to allow the battery cell to have a high reliability.

The thermal shrinkage rate of the separator has meaning known in the art, and may be measured by methods known in the art. For example, the thermal shrinkage rate of the separator may be tested with reference to GB/T 36363-2018.

It should be noted that the coating parameters (such as thickness, and the like) of the separator are all coating parameters on one side of the porous substrate. When the coating is arranged on both sides of the porous substrate, the coating parameters on either side satisfy the present disclosure, which is considered to fall within the scope of the present disclosure.

### [Negative electrode sheet]

In some embodiments, the negative electrode sheet includes a negative electrode current collector and a negative electrode film layer disposed on at least one surface of the negative electrode current collector, the negative electrode film layer including a negative electrode active material.

For example, the negative electrode current collector has two surfaces opposite in its thickness direction, and the positive electrode film layer is disposed on either one or both of the two opposite surfaces of the negative electrode current collector.

In some embodiments, the negative electrode current collector may be metal foil or a composite current collector. Examples of the metal foil may include a copper foil, a copper alloy foil, an aluminum foil, and an aluminum alloy foil. The composite current collector may include a polymer material base layer and a metal material layer formed on at least one surface of the polymer material base layer. As an example, the metal material may include one or more of copper, a copper alloy, nickel, a nickel alloy, titanium, a titanium alloy, silver, and a silver alloy. As an example, the polymer material base layer may include one or more of polypropylene (PP), polyethylene terephthalate (PET), polybutylene terephthalate (PBT), polystyrene (PS), and polyethylene (PE).

In some embodiments, the negative electrode active material may include a carbon material. Optionally, the carbon material may include one or more of artificial graphite and natural graphite.

In some embodiments, the negative electrode active material may include a silicon-based material. This may effectively increase the energy density of the battery cell. The silicon-based material may include one or more of elemental silicon, silicon oxide, a silicon-carbon composite, a silicon-nitrogen composite, and a silicon alloy material.

In some embodiments, in addition to the silicon element, the silicon-based material may further include one or more of an alkali metal element and an alkaline earth metal element, optionally one or more of Li and Mg. As an example, the silicon-based material may be a silicon-based material pre-intercalated with an alkali metal and/or an alkaline earth metal, for example, a silicon-based material pre-intercalated with Li and/or Mg.

In some embodiments, a mass percentage of the silicon-based material in the negative electrode active material may be greater than or equal to 5 wt%, optionally 8 wt% to 20 wt%.

In some embodiments, the negative electrode active material may include a carbon material and a silicon-based material, a mass percentage of the silicon-based material in the negative electrode active material may be 8 wt% to 20 wt%, and a mass percentage of the carbon material in the negative electrode active material may be greater than or equal to 80 wt%. This allows the battery cell to have both a high energy density and a long cycle life.

In some embodiments, a volume-distributed particle size Dv10 of the negative electrode active material is 4 µm to 8 µm, optionally 4.5 µm to 6.5 µm.

In some embodiments, a volume-distributed particle size Dv50 of the negative electrode active material is 6 µm to 15 µm, optionally 8 µm to 13 µm.

In some embodiments, a volume-distributed particle size Dv90 of the negative electrode active material is 15 µm to 30 µm, optionally 18 µm to 25 µm.

By adjusting the volume-distributed particle sizes Dv10, Dv50, and/or Dv90 of the negative electrode active material within the above range, the side reactions of the battery may be reduced, such that the battery cell has a long cycle life, and the battery cell may also have good low-temperature performance.

In some embodiments, the negative electrode film layer may further include a negative electrode binder, for example, one or more of styrene-butadiene rubber (SBR), aqueous unsaturated resin SR-1B, aqueous acrylic resin (for example, polyacrylic acid (PAA), polymethacrylic acid (PMAA), and sodium polyacrylate (PAAS)), polyacrylamide (PAM), polyvinyl alcohol (PVA), sodium alginate (SA), or carboxymethyl chitosan (CMCS), which is not limited in the embodiments of the present disclosure.

In some embodiments, the negative electrode film layer optionally further includes a negative electrode conductive agent. The type of the conductive agent is not particularly limited in the present disclosure. As an example, the negative electrode conductive agent may include one or more of superconducting carbon, conductive graphite, acetylene black, carbon black, ketjen black, a carbon dot, a carbon nanotube, graphene, or a carbon nanofiber.

In some embodiments, the negative electrode film layer optionally further includes other auxiliary agents. As an example, other auxiliary agents may include a thickening agent, such as carboxymethylcellulose (CMC) sodium and a PTC thermistor material.

The negative electrode sheet does not exclude other additional functional layers in addition to the negative electrode film layer. For example, in some embodiments, the negative electrode sheet further includes a conductive undercoating layer (for example, including a conductive agent and a binder) sandwiched between the negative electrode current collector and the negative electrode film layer and disposed on the surface of the negative electrode current collector. In some embodiments, the negative electrode sheet may further include a protective layer covering a surface of the negative electrode film layer.

The negative electrode sheet may be prepared according to the following method: dispersing a negative electrode active material, an optional negative electrode binder, an optional negative electrode conductive agent, and optional other auxiliary agents in a solvent and stirring the same uniformly to form a negative electrode slurry; and coating the negative electrode slurry on a negative electrode current collector, and forming the negative electrode sheet after drying, cold pressing, and other procedures. The solvent may be N-methylpyrrolidone (NMP) or de-ionized water, but is not limited thereto.

### [Positive electrode sheet]

In some embodiments, an upper charge cutoff voltage of the battery cell may be greater than or equal to 4.25 V, optionally 4.30 V to 4.45 V. This allows the battery cell to have a high energy density.

In some embodiments, the positive electrode sheet may include a positive electrode current collector and a positive electrode film layer arranged on at least one surface of the positive electrode current collector. For example, the positive electrode current collector has two surfaces opposite in its thickness direction, and the positive electrode film layer is provided on either one or both of the two opposite surfaces of the positive electrode current collector.

The positive electrode film layer includes a positive electrode active material, and the positive electrode active material includes a layered lithium-containing transition metal oxide.

In some embodiments, the layered lithium-containing transition metal oxide may include a Ni element. The molar amount of the Ni element may account for 70% or more of the total molar amount of the transition metal elements in the layered lithium-containing transition metal oxide; optionally, the molar amount of the Ni element may account for 80% or more of the total molar amount of the transition metal elements in the layered lithium-containing transition metal oxide, and more optionally, the molar amount of the Ni element may account for 90% or more of the total molar amount of the transition metal elements in the layered lithium-containing transition metal oxide.

In some embodiments, the layered lithium-containing transition metal oxide may include LiₐNi_{b}Co_{c}M_{d}OₑA_{f}, where 0≤a≤1.2, 0.8≤b<1, and 0<c<1; 0<d<1; 1≤e≤2; 0≤f≤1; M includes, but is not limited to, one or more of Mn, Al, Zr, Zn, Cu, Cr, Mg, Fe, V, Ti and B; and A includes, but is not limited to, one or more of N, F, S and Cl. This may further increase the energy density of the battery cell.

In some embodiments, as an example, the layered lithium-containing transition metal oxide may include, but is not limited to, one or more of LiNi_{0.8}Co_{0.1}Mn_{0.1}O₂, LiNi_{0.80}Co_{0.15}Al_{0.05}O₂, LiNi_{0.9}Co_{0.06}Mn_{0.04}O₂, LiNi_{0.92}Co_{0.06}Mn_{0.02}O₂, LiNi_{0.96}Co_{0.02}Mn_{0.02}O₂.

Deintercalation and consumption of Li occur during charging and discharging of the battery cell, and the molar content of Li varies when the battery cell is discharged to different states. In the enumeration of the positive electrode active material in the present disclosure, the molar content of Li is an initial state of the material, i.e., a state before adding. The positive electrode active material is applied to a battery cell, and the molar content of Li changes after charging and discharging cycles. In the enumeration of the positive electrode active material in the present disclosure, the molar content of O is only a theoretical state value, the molar content of oxygen changes due to the release of oxygen from a lattice, and the actual molar content of O fluctuates.

The higher the content of the Ni element in the layered lithium-containing transition metal oxide is, the higher the upper charge cutoff voltage of the battery cell is, and the higher the energy density of the battery cell is.

In some embodiments, the positive electrode active material includes a layered lithium-containing transition metal oxide with a monocrystalline morphology, or includes both a layered lithium-containing transition metal oxide with a monocrystalline morphology and a layered lithium-containing transition metal oxide with a polycrystalline morphology.

When the layered lithium-containing transition metal oxides are of the same type and the battery cells have the same upper charge cutoff voltage for charging, the layered lithium-containing transition metal oxide with the monocrystalline morphology has higher cycle stability than the layered lithium-containing transition metal oxide with the polycrystalline morphology, and when the volume-distributed particle sizes are the same, the layered lithium-containing transition metal oxide with the monocrystalline morphology has a smaller specific surface area than the layered lithium-containing transition metal oxide with the polycrystalline morphology, thereby reducing side reactions, capacity loss and gas production. Therefore, the layered lithium-containing transition metal oxide with the monocrystalline morphology can enable the battery cell to have a higher upper charge cutoff voltage during charging, and can also enable the high-voltage battery cell to have good cycle stability.

In some embodiments, a volume-distributed particle size Dv50 of the positive electrode active material may be less than 6 µm, optionally 2 µm to 5 µm.

The separator provided by the embodiments of the present disclosure is provided with a coating including nanocellulose and a granular filler on at least one surface of the porous substrate. When the coating has the same thickness and the coating includes both nanocellulose and the granular filler, the porosity of the separator will become lower, which will affect ion diffusion and further affect the low-temperature performance of the battery cell.

At low temperatures, the impedance of the battery cell increases, the discharge voltage plateau decreases, and the terminal voltage of the battery cell rapidly decreases, thereby causing the available capacity and power of the battery cell to decay relatively quickly.

The positive electrode sheet provided by the embodiment of the present disclosure uses a positive electrode active material having a small volume-distributed particle size Dv50, which can shorten the diffusion path of lithium ions in the positive electrode active material, and then can quickly consume the lithium ions transmitted from the negative electrode to the positive electrode through the separator. In this case, a difference in concentration between lithium ions on the negative electrode side and the positive electrode side of the separator will be increased, and a driving force for transmitting the lithium ions from the negative electrode to the positive electrode is increased, thereby improving low-temperature performance and cycle performance of the battery cell.

In some embodiments, a volume-distributed particle size Dv90 of the positive electrode active material may be less than 14 µm, optionally 4.5 µm to 13.5 µm, 4.5 µm to 11 µm, and 4.4 µm to 9.0 µm.

By further adjusting the volume-distributed particle size Dv90 of the positive electrode active material, the diffusion path of the lithium ions in the positive electrode active material can be further shortened, thereby further increasing the difference in concentration between lithium ions on the negative electrode side and the positive electrode side of the separator, increasing the driving force for transmitting the lithium ions from the negative electrode to the positive electrode, and further improving the low-temperature performance of the battery cell. By further adjusting the volume-distributed particle size Dv90 of the positive electrode active material, the side reactions of the battery can also be reduced, and the capacity attenuation rate of the battery can be reduced, thereby facilitating the improvement of the cycle performance of the battery cell. By further adjusting the volume-distributed particle size Dv90 of the positive electrode active material, the positive electrode sheet can also have a higher compaction density, which is also beneficial to improving the energy density of the battery cell.

In some embodiments, a volume-distributed particle size Dv10 of the positive electrode active material may be less than 3 µm, optionally 1 µm to 2 µm and 1.4 µm to 2 µm.

By further adjusting the volume-distributed particle size Dv10 of the positive electrode active material, the side reactions of the battery can be reduced, and the capacity attenuation rate of the battery can be reduced, thereby facilitating the improvement of the cycle performance of the battery cell, and the positive electrode sheet can also have a higher compaction density, thereby facilitating the improvement of the energy density of the battery cell.

In some examples, a particle size distribution (Dv90-Dv10)/Dv50 of the positive electrode active material may be 0.8 to 2.5, optionally 1.3 to 2.3 and 1.3 to 2.1.

By further adjusting the particle size distribution (Dv90-Dv10)/Dv50 of the positive electrode active material within the above range, the compaction density of the positive electrode sheet can be improved, and the space utilization rate of the positive electrode active material can be improved, thereby helping improve the energy density of the battery cell. By further adjusting the particle size distribution (Dv90-Dv10)/Dv50 of the positive electrode active material within the above range, the contact resistance between the positive electrode active material particles can be reduced, and the impedance of the battery cell can be reduced, which further helps improve the low-temperature performance of the battery cell.

In some embodiments, the volume-distributed particle size Dv50 of the layered lithium-containing transition metal oxide with the monocrystalline morphology may be less than or equal to 5 µm, optionally 2 µm to 4 µm, and more optionally 2.3 µm to 3.5 µm.

In some embodiments, the volume-distributed particle size Dv90 of the layered lithium-containing transition metal oxide with the monocrystalline morphology may be less than or equal to 10 µm, optionally 4.5 µm to 8 µm, and more optionally 4.5 µm to 7 µm.

In some embodiments, the volume-distributed particle size Dv10 of the layered lithium-containing transition metal oxide with the monocrystalline morphology may be less than or equal to 3 µm, optionally 1 µm to 2 µm, and more optionally 1.4 µm to 2 µm.

The particle size of the layered lithium-containing transition metal oxide with a monocrystalline morphology is reduced, which can further shorten the diffusion path of the lithium ions in the positive electrode active material, such that the positive electrode active material quickly consumes the lithium ions in the electrolyte solution, thereby further increasing the difference in concentration of the lithium ions between the negative electrode side and the positive electrode side of the separator, increasing the driving force for transmitting the lithium ions from the negative electrode to the positive electrode, and further improving the low-temperature performance of the battery cell.

By adjusting the volume-distributed particle size Dv50, Dv90, and/or Dv10 of the layered lithium-containing transition metal oxide with a monocrystalline morphology to be within the above range, it is beneficial for the battery cell to have both good low-temperature performance and good cycle performance.

In some embodiments, the particle size distribution (Dv90-Dv10)/Dv50 of the layered lithium-containing transition metal oxide with the monocrystalline morphology may be 0.8 to 2.5, optionally 1.2 to 1.6 and 1.3 to 1.5.

By adjusting the particle size distribution (Dv90-Dv10)/Dv50 of the layered lithium-containing transition metal oxide with the monocrystalline morphology to be within the above range, the compaction density of the positive electrode sheet can be improved, the space utilization rate of the positive electrode active material can be improved, which in turn helps improve the energy density of the battery cell, and the contact resistance between the positive electrode active material particles can be reduced, the impedance of the battery cell can be reduced, which in turn helps improve the low-temperature performance of the battery cell.

The layered lithium-containing transition metal oxide with the polycrystalline morphology has a higher lithium ion diffusion coefficient, better electrolyte wettability, and a shorter lithium ion diffusion path. Therefore, when the positive electrode active material includes both the layered lithium-containing transition metal oxide with the monocrystalline morphology and the layered lithium-containing transition metal oxide with the polycrystalline morphology, it is beneficial to improving the low-temperature performance of the battery cell.

In some embodiments, a volume-distributed particle size Dv50 of the layered lithium-containing transition metal oxide with the polycrystalline morphology may be 7 µm to 12 µm, optionally 8 µm to 10 µm.

In some embodiments, a volume-distributed particle size Dv90 of the layered lithium-containing transition metal oxide with the polycrystalline morphology may be 12 µm to 20 µm, optionally 13 µm to 18 µm.

In some embodiments, a volume-distributed particle size Dv10 of the layered lithium-containing transition metal oxide with the polycrystalline morphology may be 2 µm to 6 µm, optionally 3 µm to 5 µm.

The particle size of the layered lithium-containing transition metal oxide with the polycrystalline morphology is reduced, which is beneficial to improving the low-temperature performance of the battery cell, but the energy density of the battery cell will also be reduced to a certain extent, and meanwhile, the manufacturing cost of the battery cell is greatly increased.

By adjusting the volume-distributed particle size Dv50, Dv90, and/or Dv10 of the layered lithium-containing transition metal oxide with a polycrystalline morphology within the above range, it is beneficial for the battery cell to have a high energy density, good low-temperature performance, good cycle performance, and a low manufacturing cost.

In some embodiments, a particle size distribution (Dv90-Dv10)/Dv50 of the layered lithium-containing transition metal oxide with the polycrystalline morphology may be 1.1 to 1.5, optionally 1.2 to 1.4.

By adjusting the particle size distribution (Dv90-Dv10)/Dv50 of the layered lithium-containing transition metal oxide with the polycrystalline morphology to be within the above range, the compaction density of the positive electrode sheet can be improved, the space utilization rate of the positive electrode active material can be improved, which in turn helps improve the energy density of the battery cell, and the contact resistance between the positive electrode active material particles can be reduced, the impedance of the battery cell can be reduced, which in turn helps improve the low-temperature performance of the battery cell.

In some embodiments, the positive electrode film layer optionally further includes a positive electrode conductive agent. As an example, the positive electrode conductive agent may include, but is not limited to, one or more of superconducting carbon, conductive graphite, acetylene black, carbon black, ketjen black, a carbon dot, a carbon nanotube, graphene, and a carbon nanofiber.

In some embodiments, the positive electrode film layer optionally further includes a positive electrode binder. As an example, the positive electrode binder may include, but is not limited to, one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode current collector may be metal foil or a composite current collector. As an example of the metal foil, aluminum foil may be used. The composite current collector may include a polymer material base layer and a metal material layer formed on at least one surface of the polymer material base layer. As an example, the metal material may include one or more of aluminum, an aluminum alloy, nickel, a nickel alloy, titanium, a titanium alloy, silver, and a silver alloy. As an example, the polymer material base layer may include, but is not limited to, one or more of polypropylene (PP), polyethylene terephthalate (PET), polybutylene terephthalate (PBT), polystyrene (PS), and polyethylene (PE).

The positive electrode film layer is generally formed by applying positive electrode slurry onto the positive electrode current collector, followed by drying and cold pressing. The positive electrode slurry is generally formed by dispersing a positive electrode active material, an optional conductive agent, an optional binder, and any other component in a solvent and stirring the same uniformly. The solvent may be N-methylpyrrolidone (NMP), but is not limited thereto.

### [Electrolyte solution]

The electrolyte functions to conduct ions between the positive electrode sheet and the negative electrode sheet. In some embodiments, the electrolyte solution may include an electrolyte salt and a solvent.

In some embodiments, as an example, the electrolyte salt may include, but is not limited to, one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis-trifluoromethanesulfonimide (LiTFSI), lithium trifluoromethanesulfonate (LiTFS), lithium difluoro(oxalato)borate (LiDFOB), lithium dioxalate borate (LiBOB), lithium difluorophosphate (LiPO₂F₂), lithium difluorodioxalate phosphate (LiDFOP), and lithium tetrafluorooxalate phosphate (LiTFOP).

In some embodiments, as an example, the solvent may include, but is not limited to, at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfonyl methane (MSM), ethyl methyl sulfone (EMS), and ethyl sulfonyl ethane (ESE).

In some embodiments, the electrolyte solution may further include an additive. As an example, the additive may include, but is not limited to, one or more of fluoroethylene carbonate (FEC), 1,3-propanesultone (PS), and vinylene carbonate (VC).

Optionally, the total mass of the additive may be 0.5 wt% to 12 wt%, optionally 2 wt% to 8 wt%, of the total mass of the electrolyte solution.

A preparation method for the battery cell is well known. In some embodiments, the positive electrode sheet, the separator, the negative electrode sheet, and the electrolyte may be assembled to form a battery cell. As an example, the positive electrode sheet, the separator, and the negative electrode sheet may be prepared into an electrode assembly, and the electrode assembly is placed in an outer package, into which an electrolyte solution is injected after drying, followed by processes such as vacuum packaging, standing, and formation, so as to obtain the battery cell. A plurality of battery cells may be further connected in series, in parallel, or in parallel-series to form a battery module. A plurality of battery modules may also be connected in series, in parallel, or in parallel-series to form a battery pack. In some embodiments, a plurality of battery cells may also directly form a battery pack.

The embodiments of the present disclosure further provide an electric apparatus, including the battery provided by the embodiments of the present disclosure. The battery may be used as a power supply for the electric device, or as an energy storage unit for the electric device. The electric device may include, but is not limited to, a mobile apparatus (e.g., a cell phone, a tablet computer, a notebook computer, etc.), an electric vehicle (e.g., a pure electric vehicle, a hybrid electric vehicle, a plug-in hybrid electric vehicle, an electric bicycle, an electric scooter, an electric golf cart, an electric truck, etc.), an electric train, a ship, a satellite, an energy storage system, and the like.

The type of the battery of the electric device may be selected according to a use demand, for example, a battery cell, a battery module, or a battery pack.

FIG. 2 is a schematic diagram of an electric apparatus as an example. The electrical device is a pure electric vehicle, a hybrid electric vehicle, a plug-in hybrid electric vehicle, or the like. To satisfy the demands for high power and high energy density of the electric device, a battery pack or a battery module may be used.

As another example, the electric device may be a cell phone, a tablet computer, a notebook computer, or the like. The electric device is generally required to be light and thin, and may use a battery cell as a power supply.

### Examples

The following examples describe the disclosure of the present disclosure more specifically. These examples are used only for illustration, since various modifications and changes made within the scope of the disclosure of the present disclosure are obvious to those skilled in the art. Unless otherwise stated, all parts, percentages and ratios reported in the following example are on a mass basis. All reagents used in the examples are commercially available or can be synthesized according to conventional methods, and used directly without further processing. The instruments used in the example are commercially available.

The porous substrate and the nanocellulose used in the embodiments of the present disclosure may be commercially available.

### Example 1

### Preparation of positive electrode sheet

A positive electrode active material LiNi_{0.8}Co_{0.1}Mn_{0.1}O₂, a conductive agent carbon black, and a binder polyvinylidene fluoride were mixed at a mass ratio of 94: 3: 3, an appropriate amount of a solvent NMP was added, and the mixture was uniformly stirred to obtain a positive electrode slurry; and the positive electrode slurry was coated to two surfaces of a positive electrode current collector aluminum foil, followed by drying, cold pressing, and slitting to obtain a positive electrode sheet. The positive active material LiNi_{0.8}Co_{0.1}Mn_{0.1}O₂ has a monocrystalline morphology, and the volume-distributed particle size Dv50 is 2.5 µm.

### Preparation of negative electrode sheet

A mixture of a negative electrode active material artificial graphite and silicon oxide (mass ratio=90: 10), a conductive agent acetylene black, a binder styrene-butadiene rubber (SBR), and sodium carboxymethyl cellulose (CMC) were uniformly mixed in an appropriate amount of a solvent deionized water at a mass ratio of 95: 2: 2: 1 to obtain a negative electrode slurry; and the negative electrode slurry was coated to two surfaces of a negative electrode current collector copper foil, followed by drying, cold pressing, slitting, and cutting to obtain a negative electrode sheet.

### Preparation of separator

A PE porous substrate was used as the porous substrate, where the thickness was 4 µm, the puncture strength was 450 gf, the longitudinal thermal shrinkage rate at 105°C for 1 h was 2.0%, and the transverse thermal shrinkage rate at 105°C for 1 h was 1.5%

The nanocellulose, the first component with the secondary particle morphology, the second component with the primary particle morphology, and the binder polyacrylic acid were uniformly mixed in an appropriate amount of a solvent deionized water at a mass ratio of 20: 55: 23: 2 to obtain a coating slurry. An average length of the nanocellulose is 420 nm, an average diameter thereof is 24 nm, and an aspect ratio thereof is 17.5. The first component with the secondary particle morphology is alumina with the secondary particle morphology, the volume-distributed particle size Dv50 is 150 nm, and the contents of the α crystal form, the θ crystal form, the γ crystal form, and the η crystal form in the alumina are 1.1 wt%, 68.7 wt%, 29.6 wt% and 0.6 wt%, respectively, based on the total mass of the alumina. The second component with the primary particle morphology is alumina with the primary particle morphology, the volume-distributed particle size Dv50 is 350 nm, and the crystal form of alumina is mainly the α crystal form, and the content is 99 wt% or more, based on the total mass of alumina.

Vinylidene fluoride monomer (VDF) homopolymer particles, polymethyl methacrylate, a dispersant sodium carboxymethyl cellulose (CMC) and a surfactant were uniformly mixed in an appropriate amount of a solvent deionized water at a mass ratio of 87: 8: 3: 2 to obtain a bonding layer slurry.

The prepared coating slurry was coated on two surfaces of the PE porous substrate by a microgravure method, and after drying, the bonding layer slurry was coated on the coating, and then the separator was obtained through drying and slitting processes.

### Preparation of electrolyte solution

Ethylene carbonate (EC) and ethyl methyl carbonate (EMC) were mixed at a mass ratio of 20: 80 to obtain an organic solvent, and fully dried LiPF₆ was dissolved in the organic solvent to prepare an electrolyte solution with a concentration of 1mol/L, and then fluoroethylene carbonate (FEC) and 1,3-propanesultone (PS) were added, where the mass content of the FEC was 3 wt% of the total mass of the electrolyte solution, and the mass content of the PS was 0.5 wt% of the total mass of the electrolyte solution.

### Preparation of a battery

A positive electrode sheet, a separator, and a negative electrode sheet were sequentially stacked and wound to obtain an electrode assembly; and the electrode assembly was placed in an outer package, dried and then injected with an electrolyte solution, and subjected to procedures such as vacuum sealing, standing, formation, and shaping to obtain a battery cell. The size of the battery is 28.5mm×148mm×97.5mm.

In the prepared battery, the thickness of the coating located on one side of the PE porous substrate is 0.75 µm, the total thickness of the coating is 1.5 µm, the thickness of the bonding layer located on the coating is 0.5 µm, and the total thickness of the bonding layer in the separator is 1 µm. The total thickness of the separator is 6.5 µm, the width is 91.0 mm, the width of the negative electrode sheet is 88.0 mm, and the width of the positive electrode sheet is 84.0 mm.

### Example 2

The battery is prepared by a method similar to that in Example 1 except that the width of the negative electrode sheet is 87.2 mm and the width of the positive electrode sheet is 83.2 mm.

### Example 3

The battery is prepared by a method similar to that in Example 1 except that the width of the negative electrode sheet is 89.0mm and the width of the positive electrode sheet is 85.0mm.

### Example 4

The battery is prepared by a method similar to that in Example 1 except that the width of the negative electrode sheet is 86.0mm and the width of the positive electrode sheet is 82.0mm.

### Example 5

The battery is prepared in a similar manner to Example 1 except for the following differences.

A PE porous substrate was used as the porous substrate, where the thickness was 5 µm, the puncture strength was 420 gf, the longitudinal thermal shrinkage rate at 105°C for 1 h was 2.5%, and the transverse thermal shrinkage rate at 105°C for 1 h was 1.8%.

In the prepared battery, the thickness of the coating located on one side of the PE porous substrate is 0.75 µm, the total thickness of the coating is 1.5 µm, the thickness of the bonding layer located on the coating is 0.5 µm, and the total thickness of the bonding layer in the separator is 1 µm. The total thickness of the separator is 7.5 µm, the width is 91.0 mm, the width of the negative electrode sheet is 88.0 mm, and the width of the positive electrode sheet is 84.0 mm.

### Example 6

The battery is prepared in a similar manner to Example 1 except for the following differences.

A PE porous substrate was used as the porous substrate, and the porous substrate had a thickness of 5 µ m, a puncture strength of 380 gf, a thermal shrinkage rate of 2.8% in the longitudinal direction at 105 ° C. / 1h, and a thermal shrinkage rate of 2.1% in the transverse direction at 105 ° C. / 1h.

In the prepared battery, the thickness of the coating located on one side of the PE porous substrate is 0.75 µm, the total thickness of the coating is 1.5 µm, the thickness of the bonding layer located on the coating is 0.5 µm, and the total thickness of the bonding layer in the separator is 1 µm. The total thickness of the separator is 7.5 µm, the width is 91.0 mm, the width of the negative electrode sheet is 88.0 mm, and the width of the positive electrode sheet is 84.0 mm.

### Comparative Example 1

The battery is prepared by a method similar to that in Example 1 except that the width of the negative electrode sheet is 84.0mm and the width of the positive electrode sheet is 80.0mm.

### Comparative Example 2

The battery is prepared in a similar manner to Example 1 except for the following differences.

A PE porous substrate was used as the porous substrate, where the thickness was 5 µm, the puncture strength was 420 gf, the longitudinal thermal shrinkage rate at 105°C for 1 h was 2.5%, and the transverse thermal shrinkage rate at 105°C for 1 h was 1.8%.

Alumina and a binder polyacrylic acid were uniformly mixed in an appropriate amount of a solvent deionized water at a mass ratio of 94: 6 to obtain a coating slurry. The alumina has the primary particle morphology, the volume-distributed particle size Dv50 is 800 nm, the crystal form of the alumina is mainly the α crystal form, and the mass of the α crystal form accounts for 99 wt% or more, based on the total mass of the aluminum oxide.

Vinylidene fluoride monomer (VDF) homopolymer particles, polymethyl methacrylate, a dispersant sodium carboxymethyl cellulose (CMC) and a surfactant were uniformly mixed in an appropriate amount of a solvent deionized water at a mass ratio of 87: 8: 3: 2 to obtain a bonding layer slurry.

The prepared coating slurry was coated on two surfaces of the PE porous substrate by a coating machine, and after drying, the bonding layer slurry was coated on the coating, and then the separator was obtained through drying and slitting processes.

In the prepared battery, the thickness of the coating located on one side of the PE porous substrate is 1.5 µm, the total thickness of the coating is 3 µm, the thickness of the bonding layer located on the coating is 0.5 µm, and the total thickness of the bonding layer in the separator is 1.0 µm. The total thickness of the separator is 9 µm, the width is 91.0 mm, the width of the negative electrode sheet is 84.0 mm, and the width of the positive electrode sheet is 80.0 mm.

### Comparative Example 3

The battery is prepared by a method similar to that in Example 2 except that the width of the negative electrode sheet is 88.0 mm and the width of the positive electrode sheet is 84.0 mm.

### Test Section

### (1) Puncture strength test of the porous substrate

A sample was cut with a blade, and the length and width of the sample were greater than 64 mm. After checking that a high-iron tensile machine was clean, a puncture fixture was installed, the sample was placed in the center of the fixture, and an upper cover was covered. On a PC operation panel of the high-speed iron tensile machine, the test was set as "sample compression" in turn, the speed was 50 mm/min, "start" was clicked to perform the puncture test in turn, and a force-displacement curve was stored. Each group was tested at least three times in parallel, and if there were three force-displacement curves with good repeatability, the next group was tested. For accuracy, mean values of 5 parallel samples could be taken as the test result.

### (2) Test for thermal shrinkage rates of the porous substrate and the separator

A 100 mm*50 mm cutting die was taken, and the sample was punched into a 100 mm*50 mm sample by a punching machine. The punched sample of 100 mm*50 mm was marked with a marker at the lower right corner and measured before baking in two dimensions, the baking temperature and time were set, the sample was placed in an oven together with a steel pan after the oven reached the set temperature and baked, and taken out after the specified baking time and left to stand for 10 min. The transverse and longitudinal dimensions of the sample of the same number after baking were measured respectively, the transverse dimension was recorded as X2, and the longitudinal dimension was recorded as Y2. The longitudinal thermal shrinkage rate=(100-Y2)/100*100%, and the transverse thermal shrinkage rate=(50-X2)/50*100%. If the edge shrinkage of the sample is not uniform, the position of the maximum shrinkage is taken as the reference. For accuracy, mean values of 5 parallel samples could be taken as the test result.

When the thermal shrinkage rate of the porous substrate was tested, the temperature of the oven was set to be 105°C and the time to be 1 h.

When the thermal shrinkage rate of the separator was tested, the temperature of the oven was set to be 150°C and the time to be 1 h.

### (3) Thermal box performance test for the battery

At 25°C, the battery was charged at a constant current of 1C to 4.25 V, and continued to be charged at a constant voltage until the current was less than or equal to 0.05C, and left to stand for 5 min; then each battery was tested in a DHG-9070ADHG series high temperature oven with a clamp, and heated from 25°C to 60°C±2°C at a rate of 5°C/min, held for 30 min; then heated at a heating rate of 5°C/min, and held for 30 min at each temperature rise of 5°C, and the hot box temperature and holding time when the battery failed were recorded. The higher the hot box failure temperature of the battery is, the better the thermal stability of the battery is. When the hot box failure temperatures of the batteries are the same, a longer heat preservation time indicates better thermal stability of the battery. For accuracy, mean values of 5 parallel samples could be taken as the test result.

### (4) Volumetric energy density test for the battery

At 25°C, the battery was charged at a constant current of 0.33C to 4.25 V, and then charged at a constant voltage until the current was less than or equal to 0.05C, and after being left to stand for 5 min, the battery was discharged at 0.33C to 2.8 V to obtain the discharge energy Q. Volumetric energy density of battery (Wh/L)=discharge energy Q/volume Vof battery. For accuracy, mean values of 2 parallel samples could be taken as the test result.

### (5) Process yield test for the battery

1,000 batteries were produced and subjected to an insulation withstand voltage test (Hi-pot test). During the test, the wound electrode assembly was hot-pressed at 90°C and 7 MPa for 15 s; after the hot pressing was completed, a voltage of 100 V was applied between the positive and negative tabs of the wound electrodes by using a HIOKI internal resistance meter and the resistance of the wound electrodes was tested; and if the resistance was <2M Ω, the wound electrodes were regarded as Hi-pot defective products, otherwise the wound electrodes passed the Hi-pot test. The number of batteries that passed the Hi-pot test was counted, and the percentage of the number of batteries in the total number of batteries was calculated.

Table 1 shows test results of the porous substrates and the separators in Examples 1 to 6 and Comparative examples 1 to 3.

Table 2 shows test results of the batteries in the above Examples 1 to 6 and Comparative examples 1 to 3.

**Table 1**

| No. | Porous substrate | | | | Separator | | |
|---|---|---|---|---|---|---|---|
| | Thickness | Puncture strength | Longitudinal thermal shrinkage rate at 105°C for 1 h | Transverse thermal shrinkage rate at 105°C for 1 h | Total thickness | Longitudinal thermal shrinkage rate at 150°C for 1 h | Transverse thermal shrinkage rate at 150°C for 1 h |
| Examples 1 to 4 and Comparative Example 1 | 4 µm | 450 gf | 2.0% | 1.5% | 6.5 µ m | 1.3% | 1.7% |
| Example 5 | 5 µm | 420 gf | 2.5% | 1.8% | 7.5 µm | 1.7% | 2.0% |
| Example 6 | 5 µm | 380 gf | 2.8% | 2.1% | 7.5 µm | 1.8% | 2.2% |
| Comparative Examples 2 and 3 | 5 µm | 420 gf | 2.5% | 1.8% | 9.0 µm | 46.2% | 45.6% |

It may be known from the test results in Table 1 that the separator provided by the embodiments of the present disclosure may incorporates both low thickness and low thermal shrinkage rate.

**Table 2**

| No. | Total thickness (µm) of separator | Width A (mm) of separator | Width B (mm) of negative electrode sheet | A-B (mm) | Hotbox failure temperature/heat preservation time | Hi-pot test pass rate | Volumetric energy density (Wh/L) |
|---|---|---|---|---|---|---|---|
| Example 1 | 6.5 | 91.0 | 88.0 | 3.0 | 140°C/10min | 100% | 616 |
| Example 2 | 6.5 | 91.0 | 87.2 | 3.8 | 140°C/14min | 100% | 610 |
| Example 3 | 6.5 | 91.0 | 89.0 | 2.0 | 135°C/23min | 99.8% | 623 |
| Example 4 | 6.5 | 91.0 | 86.0 | 5.0 | 140°C/20min | 100% | 602 |
| Example 5 | 7.5 | 91.0 | 88.0 | 3.0 | 140°C/5min | 100% | 612 |
| Example 6 | 7.5 | 91.0 | 88.0 | 3.0 | 140°C/2min | 99.7% | 612 |
| Comparative Example 1 | 6.5 | 91.0 | 84.0 | 7.0 | 140°C/28min | 99.5% | 588 |
| Comparative Example 2 | 9.0 | 91.0 | 84.0 | 7.0 | 130°C/21min | 99.5% | 566 |
| Comparative Example 3 | 9.0 | 91.0 | 88.0 | 3.0 | 125°C/3min | 98.0% | 593 |

It may be known from the test results of Examples 1 to 6 and Comparative Examples 1 to 3 that, by using a specific separator coating and making the difference in width between the separator and the negative electrode sheet less than or equal to 5 mm, the battery can have high thermal stability, high process yield and high volumetric energy density.

In Comparative Example 1 and Comparative Example 2, the difference in width between the separator and the negative electrode sheet is relatively large, and the probability of the separator having the problems of partial redundancy, folding or breakage during the assembly process of the battery is relatively high, thereby affecting the process yield of the battery.

It may be known from the test results of Comparative Examples 2 to 3 that the common ceramic separator has poor heat resistance, and on this basis, reducing the difference in width between the separator and the negative electrode sheet will cause the process yield of the battery to become worse, and the pass rate of the Hi-pot test to be significantly reduced.

It may also be known from the test results of Comparative Examples 2 to 3 that, only by increasing the difference in width between the common ceramic separator and the negative electrode sheet, the risk of short circuit of the battery may be reduced to a certain extent and the failure temperature of the hot box of the battery may be increased, but the improvement degree is limited, and the process yield of the battery is also poor.

It may be known from the test results of Example 1, Example 5, and Example 6 that, under the premise of a less thickness, the battery using the porous substrate with higher puncture strength and lower thermal shrinkage rate may have a better process yield.
It should be noted that the present disclosure is not limited to the aforementioned implementations. The aforementioned implementations are merely examples, and any implementation having substantially the same configuration as the technical concept and exhibiting the same operation and effect within the scope of the claims of the present disclosure is included in the technical scope of the present disclosure. In addition, various modifications that can be conceived by those skilled in the art may be made to the implementations without departing from the subject matter of the present disclosure, and other implementations constructed by combining some of the constituent elements in the implementations are also included in the scope of the present disclosure.

## Claims

1. A battery cell, comprising a negative electrode sheet and a separator, wherein
the separator comprises a porous substrate and a coating arranged on at least one surface of the porous substrate, the coating comprising nanocellulose and a granular filler; and
a width of the separator is denoted as A, a width of the negative electrode sheet is denoted as B, both are in units of mm, and 0<A-B≤5 mm.

2. The battery cell according to claim 1, wherein 2 mm≤A-B≤4 mm, and optionally, 2.5 mm≤A-B≤3.5 mm.

3. The battery cell according to any one of claims 1 to 2, wherein the nanocellulose satisfies one or more of the following conditions (1) to (5):
(1) an average length of the nanocellulose is 100 nm to 1,200 nm, optionally 200 nm to 1,000 nm;
(2) an average diameter of the nanocellulose is 11 nm to 40 nm, optionally 15 nm to 32 nm;
(3) an aspect ratio of the nanocellulose is 5 to 60, optionally 12 to 35;
(4) the nanocellulose comprises a modifying group, and the modifying group comprises at least one of amino, carboxyl, aldehyde, a sulfonic acid group or a phosphate group, and optionally comprises at least one of a sulfonic acid group or a phosphate group; and
(5) the nanocellulose comprises hydroxyl and the modifying group, and a molar ratio of the modifying group to the hydroxyl is 1:4 to 4:1, optionally 2:3 to 7:3.

4. The battery cell according to any one of claims 1 to 3, wherein
a mass content of the nanocellulose in the coating is 5 wt% to 60 wt%, optionally 7 wt% to 45 wt%; and
a mass content of the granular filler in the coating is greater than 38 wt%, and optionally 53 wt% to 91 wt%.

5. The battery cell according to any one of claims 1 to 4, wherein the porous substrate satisfies one or more of the following conditions (1) to (9):
(1) a thickness of the porous substrate is less than or equal to 5 µm, optionally 3 µm to 4.5 µm;
(2) an average pore size of the porous substrate is 10 nm to 60 nm, optionally 20 nm to 40 nm;
(3) a porosity of the porous substrate is 20% to 60%, optionally 30% to 50%;
(4) a material of the porous substrate comprises polyolefin, optionally polyethylene;
(5) a puncture strength of the porous substrate is greater than or equal to 390 gf, optionally 400 gf to 480 gf;
(6) a longitudinal thermal shrinkage rate of the porous substrate at 105°C for 1 h is less than or equal to 3%, optionally 1% to 2.5%;
(7) a transverse thermal shrinkage rate of the porous substrate at 105°C for 1 h is less than or equal to 2%, optionally 1% to 1.8%; and
(8) a longitudinal tensile strength of the porous substrate is greater than or equal to 2,700 kgf/cm², optionally 2,800 kgf/cm² to 3,500 kgf/cm²; and
(9) a transverse tensile strength of the porous substrate is greater than or equal to 2,500 kgf/cm², optionally 2,600 kgf/cm² to 3,200 kgf/cm².

6. The battery cell according to any one of claims 1 to 5, wherein the granular filler comprises one or more of organic particles, inorganic particles, and an organic-inorganic composite material.

7. The battery cell according to claim 6, wherein the granular filler comprises a first component with a secondary particle morphology and a second component with a primary particle morphology.

8. The battery cell according to claim 7, wherein an average particle size of the first component with the secondary particle morphology is less than an average particle size of the second component with the primary particle morphology.

9. The battery cell according to any one of claims 7 to 8, wherein
the average particle size of the first component with the secondary particle morphology is less than 200 nm, optionally 80 nm to 180 nm; and/or
the average particle size of the second component with the primary particle morphology is 200 nm to 600 nm, optionally 300 nm to 500 nm.

10. The battery cell according to any one of claims 7 to 9, wherein a particle size of the primary particles in the first component constituting the secondary particle morphology is 15 nm to 45 nm, optionally 20 nm to 35 nm.

11. The battery cell according to any one of claims 7 to 10, wherein a specific surface area of the first component with the secondary particle morphology is greater than a specific surface area of the second component with the primary particle morphology.

12. The battery cell according to any one of claims 7 to 11, wherein
the specific surface area of the first component with the secondary particle morphology is greater than 20 m²/g, optionally 30 m²/g to 80 m²/g; and
the specific surface area of the second component with the primary particle morphology is less than or equal to 20m²/g, optionally 5 m²/g to 15 m²/g.

13. The battery cell according to any one of claims 7 to 12, wherein a mass content of the first component with the secondary particle morphology in the coating is greater than a mass content of the second component with the primary particle morphology in the coating.

14. The battery cell according to any one of claims 7 to 13, wherein
the mass content of the first component with the secondary particle morphology in the coating is 10 wt% to 85 wt%, optionally 20 wt% to 75 wt%; and
the mass content of the second component with the primary particle morphology in the coating is 5 wt% to 70 wt%, optionally 7 wt% to 60 wt%.

15. The battery cell according to any one of claims 1 to 14, wherein the coating further comprises a nongranular binder;
optionally, a content of the nongranular binder in the coating is less than or equal to 3 wt%, based on the total mass of the coating.

16. The battery cell according to any one of claims 1 to 15, wherein the separator further comprises a bonding layer, and the bonding layer is arranged on at least a part of a surface of the coating;
optionally, the bonding layer comprises a granular binder; and
optionally, the binder comprises at least one of an acrylate monomer homopolymer or copolymer, an acrylic monomer homopolymer or copolymer, and a fluorine-containing olefin monomer homopolymer or copolymer.

17. The battery cell according to any one of claims 1 to 16, wherein
a thickness of the coating is 0.2 µm to 2 µm, optionally 0.4 µm to 1 µm; and/or
a total thickness of the separator is 4 µm to 10 µm, optionally 4.5 µm to 8.5 µm; and/or
a longitudinal thermal shrinkage rate of the separator at 150°C for 1 h is less than or equal to 3%; and/or
a transverse thermal shrinkage rate at 150°C for 1 h of the separator is less than or equal to 2%.

18. The battery cell according to any one of claims 1 to 17, wherein the negative electrode sheet comprises a negative electrode current collector and a negative electrode film layer arranged on at least one surface of the negative electrode current collector, the negative electrode film layer comprises a negative electrode active material, and the negative electrode active material comprises a carbon material; and optionally, the carbon material comprises one or more of artificial graphite and natural graphite.

19. The battery cell according to any one of claims 1 to 18, wherein the negative electrode sheet comprises a negative electrode current collector and a negative electrode film layer arranged on at least one surface of the negative electrode current collector, the negative electrode film layer comprises a negative electrode active material, and the negative electrode active material comprises a silicon-based material;
optionally, the silicon-based material further comprises one or more of an alkali metal element and an alkaline earth metal element, and optionally comprises one or more of Li and Mg; and/or
optionally, a mass percentage of the silicon-based material in the negative electrode active material is greater than or equal to 5 wt%, optionally 8 wt% to 20 wt%.

20. The battery cell according to any one of claims 1 to 19, wherein an upper charge cutoff voltage of the battery cell is greater than or equal to 4.25 V, optionally 4.30 V to 4.45 V.

21. The battery cell according to any one of claims 1 to 20, further comprising a positive electrode sheet, wherein the positive electrode sheet comprises a positive electrode current collector and a positive electrode film layer arranged on at least one surface of the positive electrode current collector, the positive electrode film layer comprises a positive electrode active material, the positive electrode active material comprises a layered lithium-containing transition metal oxide, and a volume-distributed particle size Dv50 of the positive electrode active material is less than or equal to 6 µm, optionally, 2 µm to 5 µm.

22. The battery cell according to claim 21, wherein the positive electrode active material further satisfies one or more of the following conditions (1) to (3):
(1) a volume-distributed particle size Dv90 of the positive electrode active material is less than or equal to 14 µm, optionally, 4.5 µm to 13.5 µm;
(2) a volume-distributed particle size Dv10 of the positive electrode active material is less than or equal to 3 µm, optionally, 1 µm to 2 µm; and
(3) a particle size distribution (DV90-DV10)/DV50 of the positive electrode active material is 0.8 to 2.5, optionally 1.3 to 2.3.

23. The battery cell according to any one of claims 21 to 22, wherein the positive electrode active material comprises a layered lithium-containing transition metal oxide with a monocrystalline morphology, or comprises both a layered lithium-containing transition metal oxide with a monocrystalline morphology and a layered lithium-containing transition metal oxide with a polycrystalline morphology.

24. The battery cell according to claim 23, wherein the layered lithium-containing transition metal oxide with the monocrystalline morphology satisfies one or more of the following conditions (1) to (4):
(1) a volume-distributed particle size Dv50 of the layered lithium-containing transition metal oxide with the monocrystalline morphology is less than or equal to 5 µm, optionally 2 µm to 4 µm;
(2) a volume-distributed particle size Dv90 of the layered lithium-containing transition metal oxide with the monocrystalline morphology is less than or equal to 10 µm, optionally 4.5 µm to 8 µm;
(3) a volume-distributed particle size Dv10 of the layered lithium-containing transition metal oxide with the monocrystalline morphology is less than or equal to 3 µm, optionally 1 µm to 2 µm; and
(4) a particle size distribution (Dv90-Dv10)/Dv50 of the layered lithium-containing transition metal oxide with the monocrystalline morphology is 0.8 to 2.5, optionally 1.3 to 1.5.

25. The battery cell according to any one of claims 23 to 24, wherein the layered lithium-containing transition metal oxide with the polycrystalline morphology satisfies one or more of the following conditions (1) to (4):
(1) a volume-distributed particle size Dv50 of the layered lithium-containing transition metal oxide with the polycrystalline morphology is 7 µm to 12 µm, optionally 8 µm to 10 µm;
(2) a volume-distributed particle size Dv90 of the layered lithium-containing transition metal oxide with the polycrystalline morphology is12 µm to 20 µm, optionally 13 µm to 18 µm;
(3) a volume-distributed particle size Dv10 of the layered lithium-containing transition metal oxide with the polycrystalline morphology is 2 µm to 6 µm, optionally 3 µm to 5 µm; and
(4) a particle size distribution (Dv90-Dv10)/Dv50 of the layered lithium-containing transition metal oxide with the polycrystalline morphology is 1.1 to 1.5, optionally 1.2 to 1.4.

26. A battery, comprising the battery cell according to any one of claims 1 to 25.

27. An electric apparatus, comprising the battery according to claim 26.
